# EUROPEAN PATENT APPLICATION

(11) **EP 1 686 549 A1**
(43) Date of publication of application: **02.08.2006**
(21) Application number: 06001875.1
(22) Date of filing: 30.01.2006
(51) Int. Cl.: G07F 17/32

(54) **Game machine**

(30) Priority: 31.01.2005 JP 2005023086; 31.01.2005 JP 2005023087
(71) Applicant: Aruze Corporation, Tokyo 135-0063 (JP)
(72) Inventor: Okada, Kazuo, Tokyo 135-0063 (JP)
(74) Representative: Grünecker, Kinkeldey, Stockmair & Schwanhäusser Anwaltssozietät

(57) **Abstract**

A game machine(1) according to one embodiment of the invention has a game medium detecting portion(83) that detects a game medium inserted in a game medium inserting slot(27), a value detecting portion (71) that detects the value of the game medium accumulated in an accumulator means(85), an elevating apparatus (15) that moves a image display device (6) upward and downward with respect to a housing (2), a driving source (41) that drives the elevating apparatus(15), an operation portion (32, 33) for performing switching operation on the driving source(41), and a driving control apparatus(71) which performs control so that the switching operation is performed on the driving source(41) based on the operation portion (32, 33) in case of the game medium being detected by the game medium detecting portion (83), while the switching operation is not performed on the driving source (41) based on the operation portion (32, 33) in case of a value of the game medium detected by the value detecting portion(71) becoming a state of disabling continuation of the game.

## Description

### BACKGROUND OF THE INVENTION

The present invention relates to a game machine where a game is played based on a predetermined image displayed in an image display device, and more particularly, to a game machine enabling a player to play a game in game environments suitable for the player by enabling the image display device to be raised and lowered with respect to the housing for a period until a value of a game medium that is stored (accumulated) in case of the medium being inserted becomes a state of disabling continuation of the game. Further, the invention relates to a game machine where a game is played based on a predetermined image displayed in an image display device and operation in an operation portion provided on a control panel, and more particularly, to a game machine enabling a player to play a game in game environments suitable for the player without the need of large operation load, by a structure where the image display device and control panel are integrally raised and lowered with respect to the housing, while the control panel is raised and lowered relatively to the image display device.

Currently, as game machines such as a slot machine and card game machine, apparatuses have been used in various fields in which various control is performed by displaying a predetermined image to a user using an image display area such as a monitor, and by the user performing operation using an operation portion such as a control button and control panel based on the displayed image. Then, in such apparatuses having the image display area and operation portion, the image display area has been configured conventionally so that its position and angle are variable to enable the user to easily view the image displayed in the image display area. Further, the control portion has been configured also so that its position and angle are variable to facilitate user operation.

For example, a support apparatus for a display is described in Utility Model Gazette No. 3095780(a patent document 1) such that an elevating tool for an arm is raised and lowered with respect to a screw rod to adjust an angle of an arm part by rotating a motor forward or reversely, the display rotatably coupled to a front end of the arm part is whereby moved to a desired height in the vertical direction, and it is thus possible to adjust heights of the screen and operation button.

Further, a CAD apparatus integrally provided with a drawing board is described in JP H07-17188(a patent document 2) which enables vertical-direction height adjustment of a housing provided with a large-screen liquid crystal display, key board for input operation, menu board operated by a mouse or the like, and so on, and further enables tilt angle adjustment of the housing by operating a lever of a height adjusting tool such as a gas spring inserted between a back lower plane and a horizontal board.

However, in the apparatuses having the image display area as described in above-mentioned Patent Documents 1 and 2, a user is capable of varying the position and angle of the image display area freely at any timing. In other words, even a third person who does not have an intention to use the apparatus is capable of varying the position and angle freely by performing predetermined operation. Therefore, for users having an intention to really use the apparatus and/or stores having the apparatus, it is necessary to correct a position and angle of the image display area thus changed by the third person to an appropriate position and angle every time. Accordingly, there arises a need of preventing such action by the third person while enabling the position and angle of the image display area to be varied.

Further, particularly in game machines such as a slot machine installed in a game store as an apparatus having the image display area, it is general that a plurality of machines is aligned and displays a demonstration image except the time game is played. At this point, when the third person is capable of varying the position and angle of the image display area freely, display forms of the game machines are not unified, resulting in disfigurement.

Furthermore, in the apparatuses having the image display area and operation portion as described in above-mentioned Patent Documents 1 and 2, positions and angels of the image display area and operation portion are always varied integrally. In other words, adjusting a height of the image display area uniquely determines a height of the operation portion, and therefore, it is not possible to make adjustments to change the positional relationship between the area and portion such that while keeping the current height of the image display area, only the height of the operation portion is made higher or lower than the current height. Accordingly, the conventional techniques have not reached provision of games in appropriate environments completely suitable to a body type of a player.

Meanwhile, when positions and angles of the image display area and operation portion are made adjustable completely independently of each other, it is required to first adjust the position and angle of the image display area and then similarly adjust the position and angle of the operation portion starting with an initial point. Accordingly, as compared with the case of integrally adjusting, significant amounts of operation are necessary for the adjustments.

Further, particularly in game machines such as a slot machine installed in a game store as an apparatus having the image display area, since a player performs operation with the operation portion while staring the image display area over a long time, the need particularly arises of providing suitable environments completely adapted to a body type of the user.

Accordingly, a game machine with good usability is required such that an image display device is configured to be able to move upward and downward with respect to the housing for a period during which a game medium is inserted and then a game is finished, whereby enabling only a player that actually plays the game to raise and lower the device while playing the game in suitable game environments, and further enabling prevention of a nuisance by a third person. Further, in consideration of the respect that a relative positional relationship between the image display area and operation portion does generally not differ largely between players, such a game machine is required that is capable of providing suitable environments adapted to a body type of a player while minimizing an operation amount of adjustment.

### BRIEF SUMMARY OF THE INVENTION

According to an aspect of the invention, provided is a game machine having a housing, a game medium inserting slot to insert a game medium in the housing, a game medium detecting portion that detects the game medium inserted in the game medium inserting slot, accumulator means that accumulates the game medium inserted in the game medium inserting slot, a value varying portion that varies a value of the game medium accumulated in accumulator means based on a result of a game, a value detecting portion that detects the value of the game medium accumulated in accumulator means, an image display device which is provided in the housing and displays a predetermined image based on a state of the game, a first elevating apparatus that moves the image display device upward and downward with respect to the housing, a first driving source that drives the first elevating apparatus, a first operation portion that is provided in the housing and electrically connected to the first driving source while performing switching operation on the first driving source, and a driving control portion which performs control so that the switching operation is performed on the first driving source based on the first operation portion in case of the game medium being detected by the game medium detecting portion, while the switching operation is not performed on the first driving source based on the first operation portion in case of a value of the game medium detected by the value detecting portion becoming a state of disabling continuation of the game.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out hereinafter.

### BRIEF DESCRIPTION OF THE SEVERAL VIEWS OF THE DRAWING

The accompanying drawings, which are incorporated in and constitute a part of the specification, illustrate embodiments of the invention, and together with the general description given above and the detailed description of the embodiments given below, serve to explain the principles of the invention.
FIG.1 is a perspective view of a slot machine according to a first embodiment of the invention;
FIG.2 is a side view of the slot machine according to the first embodiment with a display unit lowered;
FIG.3 is a side view of the slot machine according to the first embodiment with the display unit raised;
FIG.4 is a schematic view showing an elevating unit according to the first embodiment;
FIG.5 is a schematic view showing an internal structure and a driving mechanism of the elevating unit according to the first embodiment;
FIG.6 is a schematic view showing pattern lines respectively displayed in variable display portions according to the first embodiment;
FIG.7 is a block diagram schematically showing a control system of the slot machine according to the first embodiment;
FIG.8 is a block diagram schematically showing a liquid crystal driving circuit of a liquid crystal display;
FIG.9 is a flowchart of a main processing program for the slot machine according to the first embodiment;
FIG.10 is a flowchart of a height adjustment processing program for the liquid crystal display of the slot machine according to the first embodiment;
FIG.11 is a flowchart of a height default processing program for the liquid crystal display of the slot machine according to the first embodiment;
FIG.12 is a flowchart of an interrupt processing program for the slot machine according to the first embodiment;
FIG.13 is a schematic view illustrating the operation of the slot machine at the time of starting a game;
FIG.14 is a schematic view illustrating the operation of the slot machine after adjusting the height of the display;
FIG.15 is a schematic view illustrating the operation of the slot machine at the time of finishing the game;
FIG.16 is a perspective view of a slot machine according to a second embodiment of the invention;
FIG.17 is a side view of the slot machine of the second embodiment in a default state;
FIG.18 is a side view of the slot machine according to the second embodiment with a display unit and control unit integrally raised;
FIG.19 is a side view of the slot machine according to the second embodiment with the control unit lowered relatively to the display unit;
FIG.20 is a schematic view showing a second elevating unit according to the second embodiment;
FIG.21 is a block diagram schematically showing a control system of the slot machine according to the second embodiment;
FIG.22 is a flowchart of a main processing program for the slot machine according to the second embodiment;
FIG.23 is a flowchart of a height adjustment processing program for the slot machine according to the second embodiment;
FIG.24 is a flowchart of a height default processing program for the slot machine according to the second embodiment;
FIG.25 is a flowchart of an interrupt processing program for the slot machine according to the second embodiment;
FIG.26 is a schematic view illustrating the operation of the slot machine according to the second embodiment at the time of starting a game;
FIG.27 is a schematic view illustrating the operation of the slot machine according to the second embodiment after adjusting the height;
FIG.28 is a schematic view illustrating the operation of the slot machine according to the second embodiment in manually adjusting the height using each operation button; and
FIG.29 is a schematic view illustrating the operation of the slot machine according to the second embodiment at the time of finishing the game.

### DETAILED DESCRIPTION OF THE INVENTION

A game machine according to the invention will specifically be described below based on two embodiments specifically describing a slant type slot machine 1 with reference to accompanying drawings. Slot machines 1 and 1A according to these embodiments are a type of slot machine using the so-called video reel where a game is carried out by varying and stopping patterns to display on a liquid crystal display based on the operation of each operation button arranged on a control panel, and are configured to enable heights of the liquid crystal display and control panel to be varied corresponding to a player as described later.

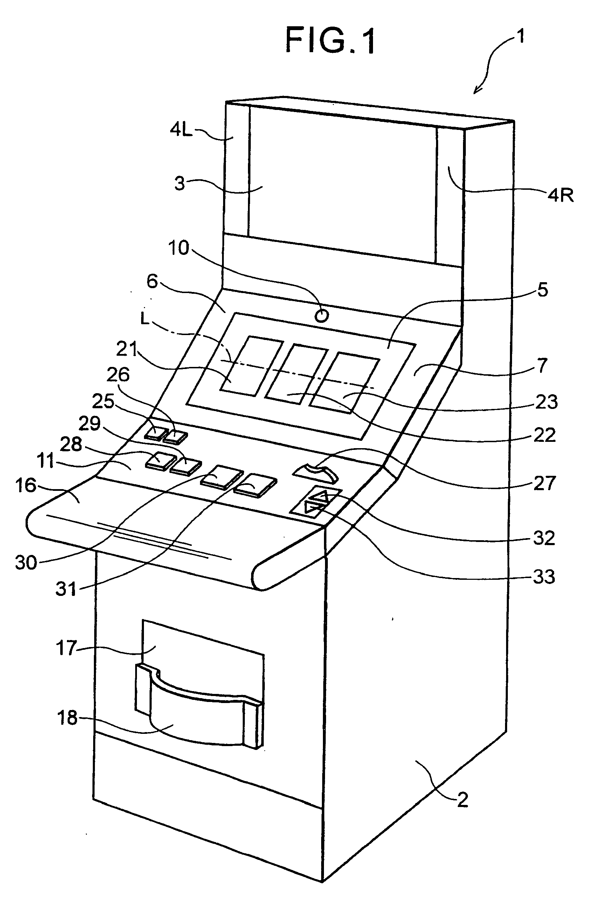

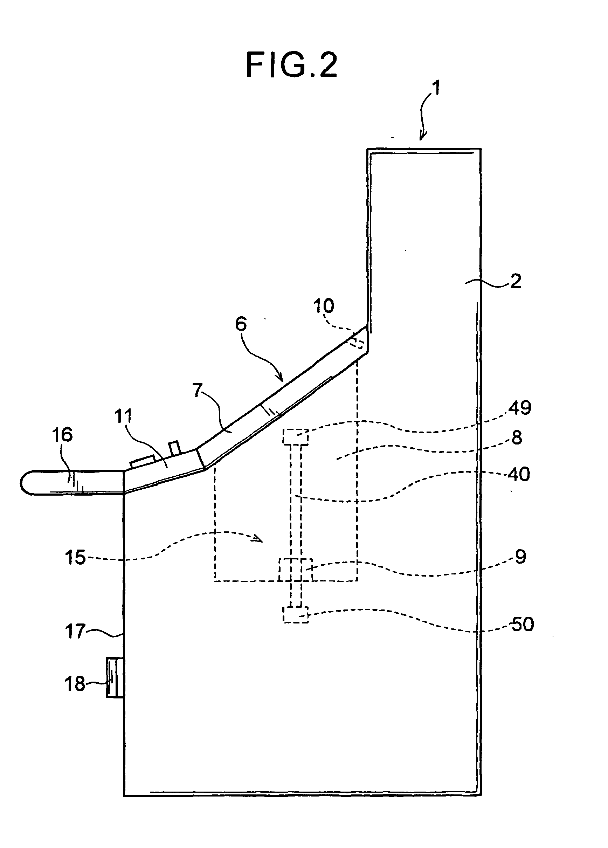

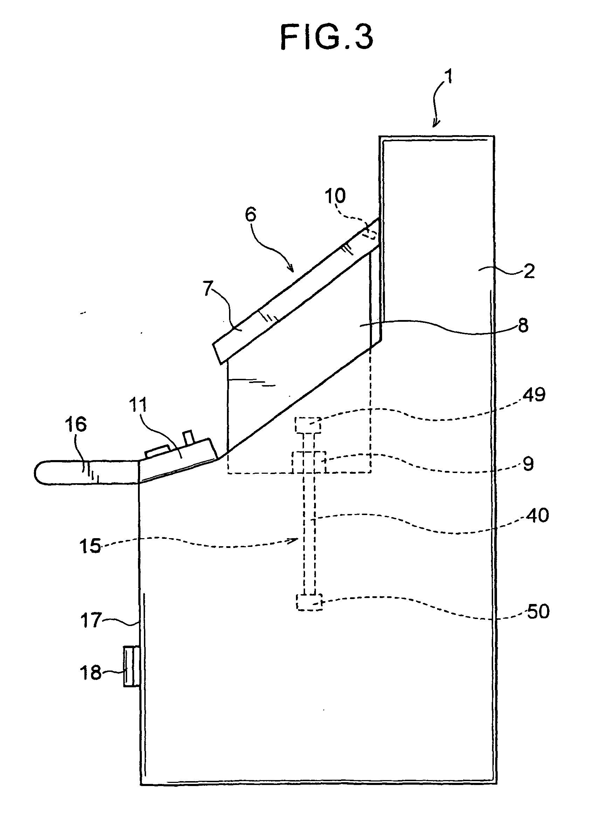

Described first is a schematic configuration of the slot machine 1 according to the first embodiment based on FIGs.1 to 3. FIG.1 is a perspective view of the slot machine according to this embodiment, and FIGs.2 and 3 are side views of the slot machine 1 according to this embodiment.

The slot machine 1 of this embodiment is the so-called slant type game housing configured to enable a player to play a game while sitting as shown in FIG.1. The slot machine 1 has a cabinet 2 forming the entire shape, and in an upper portion of the cabinet 2 is formed a front panel portion 3 describing combinations of winning patterns, awards thereof, advertisement and so on. To the both sides of the front panel portion 3 are disposed speakers 4L and 4R that output music and the like according to the game of the slot machine 1.

In a substantially front central portion of the cabinet 2 is disposed a display unit (an image display device; image display means) 6 having a liquid crystal display 5. The display unit 6 is basically comprised of the liquid crystal display 5, a front panel 7 with the liquid crystal display 5 attached to its substantial center, a base portion 8 that is installed inside the cabinet 2 and supports the front panel 7 on its upper face inclined a predetermined angle, a driving mechanism portion 9 that is a driving source that raises and lowers the display unit 6 provided at the lower end of the base portion 8, and an IR sensor (a position detecting portion; position detecting means) 10 that is provided at an upper portion of the liquid crystal display 5 and that detects a position of a player who plays with the slot machine 1.

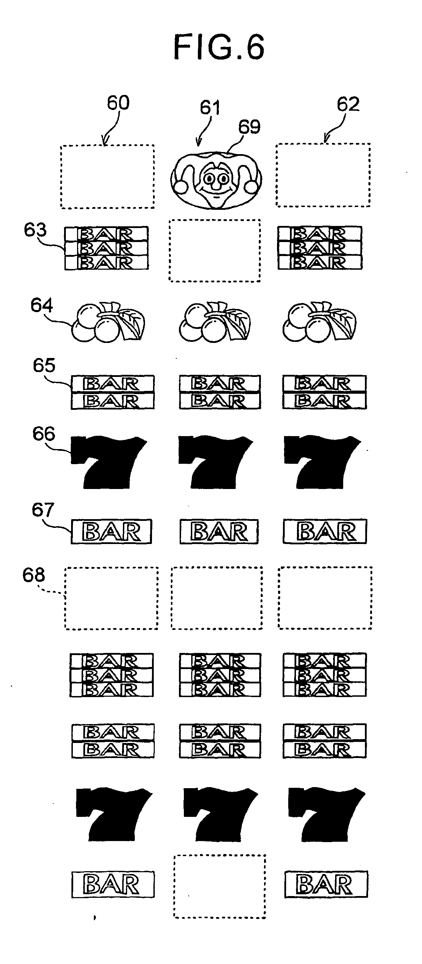

The liquid crystal display 5 displays the number of credits that the player currently has and various staged images, while further displaying three variable display portions, 21, 22 and 23, near its center portion. Then, pattern lines 60 to 62 (see FIG.6) described later respectively in the variable display portions 21 to 23 are scrolled from up to down to be displayed variably, and stopped and displayed by a predetermined combination of patterns after a lapse of predetermined time. Then, the player pursues the game using the displayed pattern lines and various operation buttons.

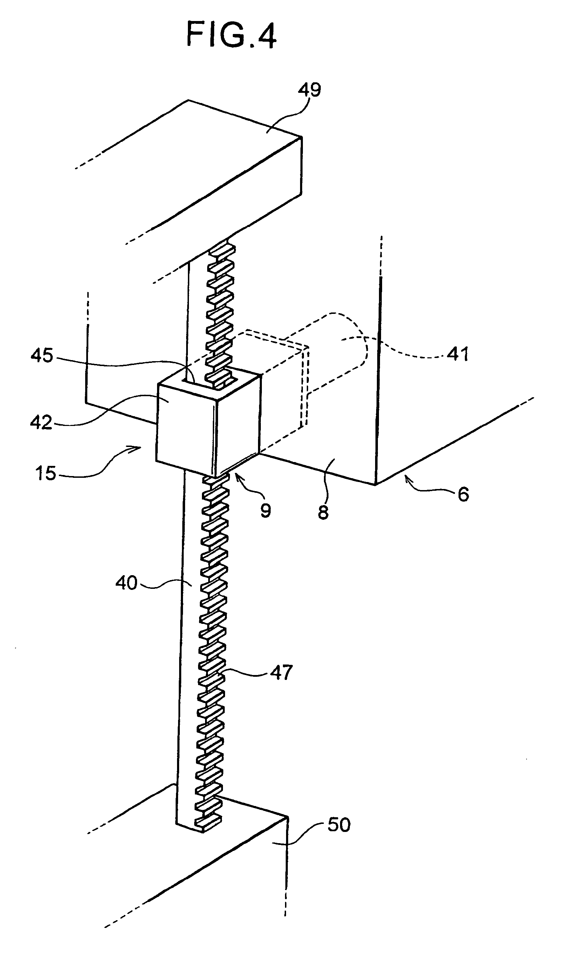

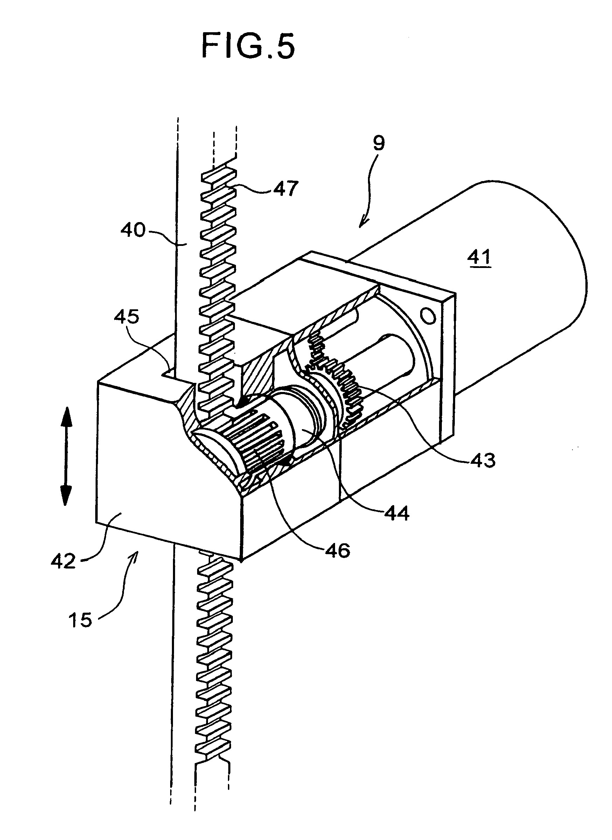

Further, the display unit 6 is supported to be able to move upward and downward with respect to the cabinet 2 via the base portion 8, and configured to be raised and lowered electrically by transforming rotation driving of a stepping motor (a first driving source; first driving source) 41 into parallel motion in the vertical direction by an elevating unit (an elevating apparatus; elevating means) 15 (see FIGs.4 and 5) comprised of the driving mechanism portion 9 and a rack 40 provided inside the cabinet 2 as described later. Herein, FIG.2 shows the slot machine 1 in a state (a position of the display unit 6 in this state is a default position in this embodiment) where the display unit 6 is moved downward the lowest with respect to the cabinet 2 by the elevating unit 15, and FIG.3 shows the slot machine 1 in a state where the display unit 6 is moved upward the highest with respect to the cabinet 2 by the elevating unit 15.

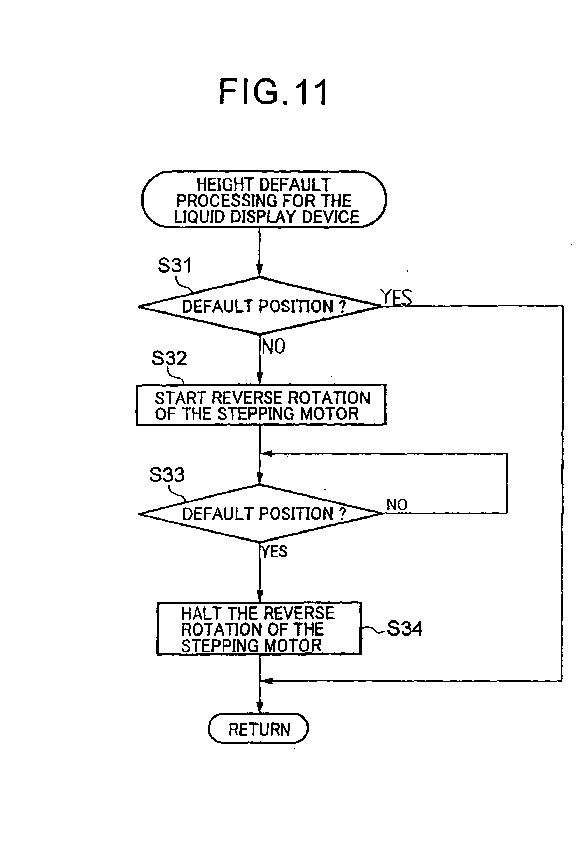

As shown in FIG.2, in the state where the display unit 6 is moved downward the lowest with respect to the cabinet 2, the front panel 7 of the display unit 6 comes into contact with the cabinet 2. In addition, the position of the display unit 6 in the state of being most lowered is the default position, and the display unit 6 is controlled to be located at the default position after the game is finished (see FIG.11).

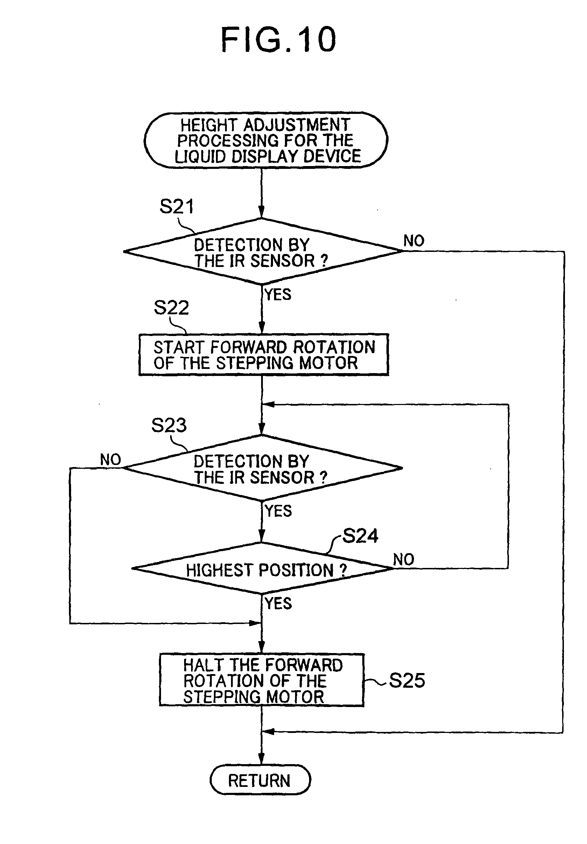

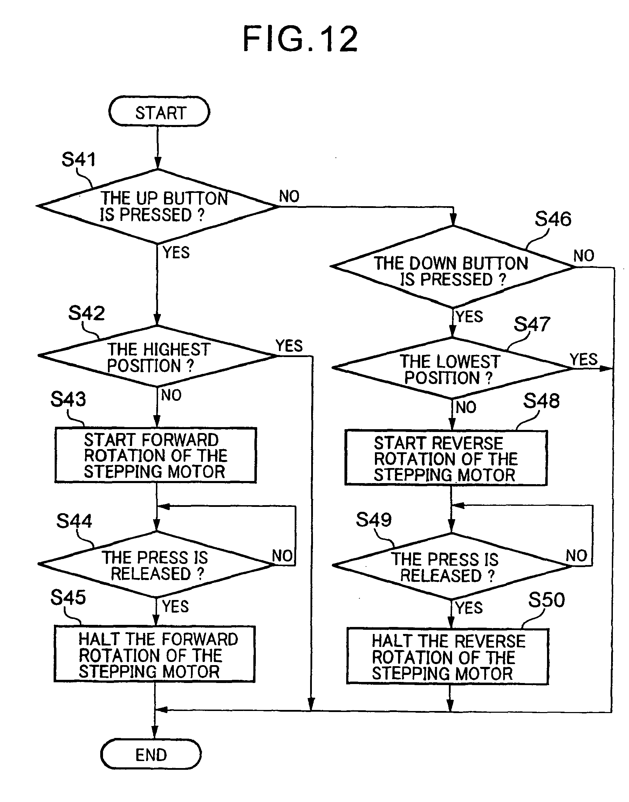

Meanwhile, as shown in FIG.3, in the state where the display unit 6 is moved upward the highest with respect to the cabinet 2, the front panel 7 of the display unit 6 is spaced a predetermined distance (30 cm in this embodiment) away from the cabinet 2. Then, in the slot machine 1 according to this embodiment, such control is performed that the display unit 6 is moved upward and downward between positions as shown in FIGs.2 and 3 when the player inserts a coin(a game medium) in a coin inserting slot (a game medium inserting slot) 27, and the height of the liquid crystal display 5 is adjusted automatically according to a position of the head of a player (see FIG.10). Further, the height of the liquid crystal display 5 can be adjusted manually by performing switching operation on the stepping motor 41 based on press of an up button (a first operating portion; first operating means) 32 and/or down button (a first operating portion; first operating means) 33 as described later, and whereby moving the display unit 6 upward and/or downward (see FIG.12).

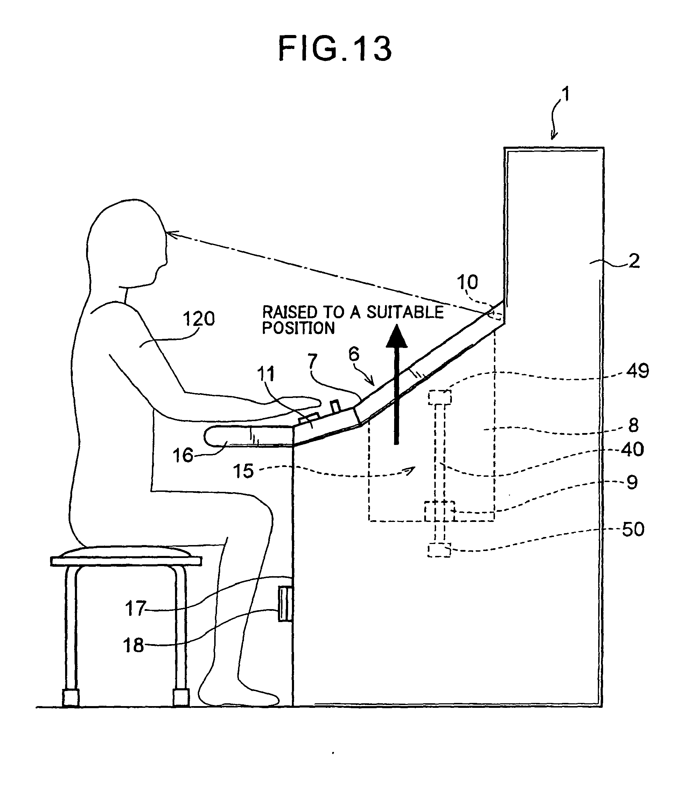

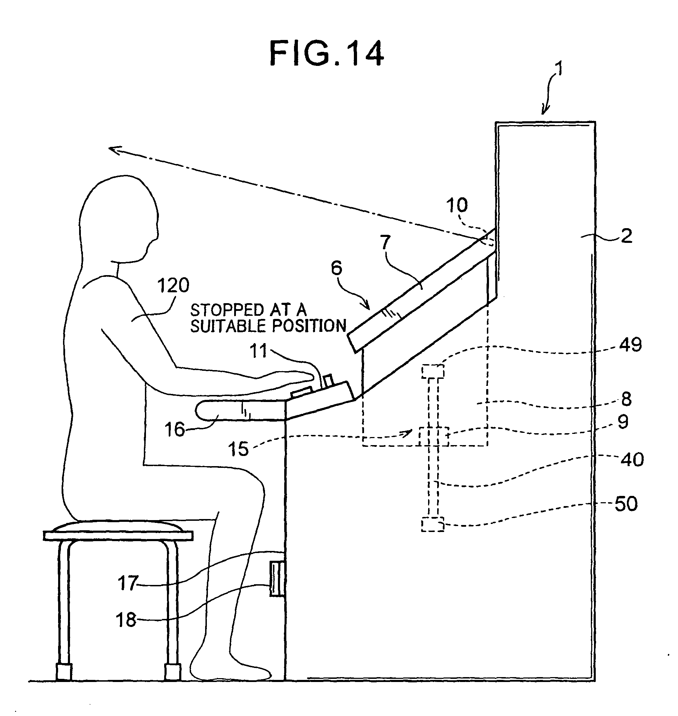

Further, the IR sensor 10 is the so-called thermal IR sensor, and senses a change in temperature of a sensor element caused by receiving infrared radiation emitted from a human body and the like as a change in resistance or a change in physical phenomenon such as thermoelectromotive and pyroelectric effect to output as an electric signal. In the slot machine 1 according to this embodiment, the IR sensor 10 detects a position of the head of a player, the display unit 6 is moved upward and downward according to the position of the head, and the height of the liquid display unit 5 is whereby set automatically (see FIGs.13 and 14). In addition, the position adjustment of the liquid crystal display 5 by the IR sensor 10 will specifically be described later.

A control panel 11 slating gently toward the front side is provided at the lower side of the liquid crystal display 5. At the upper stage of the control panel 11 are provided a C/P (credit/payout) button 25 and help button 26, and the coin inserting slot 27 is provided to the right of the help button 26. Further, at the lower stage of the control panel 11 are provided a bet button 28, maxbet button 29, repeat bet button 30, start button 31, up button 32 and down button 33 in this order from the left side.

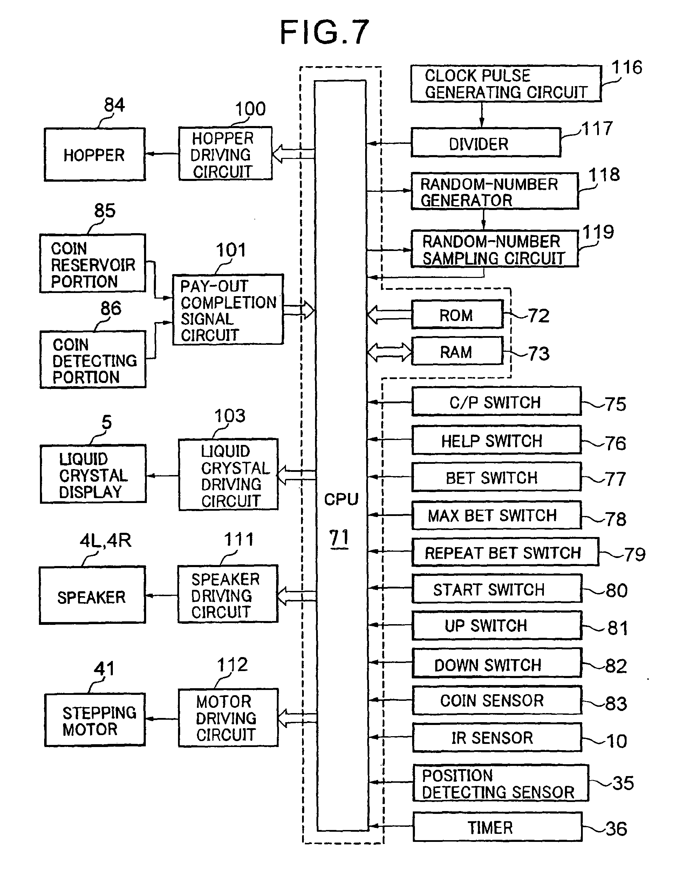

The C/P button 25 is a button that generally is pressed when the game is finished, and pays out the credit that the player currently owns as coins corresponding to a value of the credit. Accordingly, in pressing the C/P button 25, coins are paid to the player via a coin paying outlet 17 from a hopper 84 (see FIG.7). In addition, when the C/P button is not pressed, coins given as a bonus as a result of the game are automatically saved as the credit and stored (accumulated) in a coin reservoir portion(coin accumulation portion; accumulator means) 85 (see FIG.7).

Further, the C/P button 25 has an internal C/P switch 75 (see FIG.7), and when the C/P button 25 is pressed, a switch signal from the C/P switch 75 is output to a CPU 71 (see FIG.7).

The help button 26 is a button that is pressed when the operation method and the like of the slot machine 1 is uncertain. Accordingly, when the help button 26 is pressed, the liquid crystal display 5 displays various help information.

In addition, the help button 26 has an internal help switch 76 (see FIG.7), and when the help button 26 is pressed, a switch signal from the help switch 76 is output to the CPU 71 (see FIG.7).

The bet button 28 is a button to operate in betting the credit coins. Herein, whenever the bet button 28 is pressed once, the number of bets is added by one to a prize line L. It is possible in the slot machine 1 according to this embodiment to set the number of bets in a range of "1" to "10" on the prize line L to play a game.

In addition, the bet button 28 has an internal bet switch 77 (see FIG.7), and when the bet button 28 is pressed, a switch signal from the bet switch 77 is output to the CPU 71 (see FIG.7).

The maxbet button 29 is a button to operate in betting the credit coins by the maximum number of bets (10 bets in this embodiment) on the prize line L. Herein, when the maxbet button 29 is pressed, the number of bets on the prize line L is set at "10".

In addition, the maxbet button 29 has an internal maxbet switch 78 (see FIG.7), and when the maxbet button 29 is pressed, a switch signal from the maxbet switch 78 is output to the CPU 71 (see FIG.7).

Repeat bet button 30 is a button to operate in starting a game in the slot machine 1 based on the number of current bets or the number of last bets. Accordingly, when the repeat bet button 30 is pressed, the variable display portions 21 to 23 of the liquid crystal display 5 start variable display of the patterns.

In addition, the repeat bet button 30 has an internal repeat bet switch 79 (see FIG.7), and when the repeat bet button 30 is pressed, a switch signal from the repeat bet switch 79 is output to the CPU 71 (see FIG.7).

The start button 31 is a button to operate in staring a game in the slot machine 1 based on the number of bets bet by the bet button 28 or maxbet button 29. Accordingly, when the start button 31 is pressed, the variable display portions 21 to 23 of the liquid crystal display 5 start variable display of the patterns.

In addition, the start button 31 has an internal start switch 80 (see FIG.7), and when the start button 31 is pressed, a switch signal from the start switch 80 is output to the CPU 71 (see FIG.7).

The up button 32 and down button 33 are buttons to operate respectively in moving the display unit 6 upward and downward for the cabinet 2. When the up button 32 is pressed, the stepping motor 41 of the elevating unit 15 rotates forward, and raises the display unit 6 for the cabinet 2 at predetermined speed (for example, 1cm/sec) during a period of time the button is pressed. Meanwhile, when the down button 33 is pressed, the stepping motor 41 of the elevating unit 15 rotates reversely, and lowers the display unit 6 for the cabinet 2 at predetermined speed (for example, 1cm/sec) during a period of time the button is pressed. Then, in the slot machine 1 according to this embodiment, in order to prevent operation by a third person who does not play a game, raising and lowering by the up button 32 and down button 33 is only allowed for a period until a predetermined time (30 seconds in this embodiment) elapses in such a state that a coin such as a dime is inserted in the coin inserting slot 27 and then the stored(accumulated) coin (credit) is consumed (in other words, during a period of time the player is playing the game) as described later.

In addition, the up button 32 and down button 33 have internal up switch 81 and down switch 82 (see FIG. 7), and when the up button 32 and down button 33 are pressed, switch signals from the up switch 81 and down switch 82 are output to the CPU 71, respectively (see FIG.7).

A coin sensor 83 is disposed at the coin inserting slot 27, and when a coin such as a dime is inserted in the coin inserting slot 27, a coin detecting signal is output to the CPU 71 via the coin sensor 83 (see FIG.7), and the credit (one credit for 10 cents in this embodiment) is added corresponding to the inserted coin.

An arm rest 16 having a substantially horizontal plane is formed at the front side of the control panel 11. The arm rest 16 is configured for a player to place his/her arm on the arm rest 16 so as to operate the control panel 11 easily in playing a game while sitting in the chair not shown.

Further, at the lower portion of the cabinet 2 are formed the coin paying outlet 17, and a coin receiving portion 18 that receives coins paid out from the coin paying outlet 17. Inside the coin paying outlet 17 are disposed the hopper 84 capable of discharging coins one by one and a coin detecting portion 86 described later comprised of a sensor and the like (see FIG.7). The coin detecting portion 86 detects the number of coins paid out from the coin paying outlet 17. Instead of directly paying coins, a receipt-like sheet describing the number of coins (values) may be discharged. In this case, the player brings the discharged sheet to a counter or the like of the game shop to enable exchange with a bonus and the like.

Based on FIGs.4 and 5, described next is the elevating unit 15 that moves the display unit 6 upward and downward in the slot machine 1 according to this embodiment. FIG.4 is a schematic view showing the elevating unit according to this embodiment, and FIG.5 is a schematic view showing an internal structure of the elevating unit and a driving mechanism for the unit according to this embodiment.

As described previously, the elevating unit 15 is an apparatus to move the display unit 6 having the liquid crystal display 5 upward and downward with respect to the cabinet. As shown in FIG.4, the elevating unit 15 is comprised of the driving mechanism portion 9 provided at the lower end of the base portion 8 of the display unit 6 and the rack 40 fixed to the cabinet 2.

The driving mechanism portion 9 is comprised of the stepping motor 41 and a gear case 42. Further, as shown in FIG.5, inside the gear case 42 are provided a deceleration gear portion 43, a pinion 44 and a bearing portion 45.

The stepping motor 41 is a motor rotatable on a predetermined-step basis without feedback by applying a pulse signal thereto. Further, the number of application times and the cycle of the pulse signal determine a rotation angle and rotation speed, and the motor is halted with the rotation angle of the time held by halting the pulse signal. Accordingly, based on the rotation direction (two directions i.e. forward and reverse directions) and rotation angle of the stepping motor 41 driven by the pulse signal, the driving mechanism portion 9 can be moved a predetermined distance in the vertical direction for the rack 40, and according to the motion, the display unit 6 is moved upward or downward for the cabinet 2. Further, the stepping motor 41 is connected to the CPU 71 via the motor driving circuit 112 (see FIG.7), and driving of the motor 41 is controlled based on a program stored in ROM or the like as described later.

The deceleration gear portion 43 is configured by combining a plurality of gears, and by setting a gear ratio at a predetermined ratio, decelerates the rotation speed conveyed from the stepping motor 41, while increasing torque.

The pinion 44 is a circular gear member with a cylindrical shape, and has a tooth flank 46 formed on its outer circumference. The pinion 44 is coupled at its one end to the deceleration gear portion 43, and rotated in a predetermined direction according to rotation driving of the stepping motor 41. Then, by being combined with the rack 40 described later provided in the cabinet 2, the pinion 44 transforms the rotary motion by the stepping motor 41 into the parallel motion to move the display unit 6 upward and downward.

The bearing portion 45 is provided at a position coming into contact with the rack 40 passing through the gear case 42, and supports so that the gear case 42 is capable of moving smoothly on the rack 40.

The rack 40 is a planar gear member formed in rod-shape, and provided with a tooth flank 47 in the longitudinal direction at one planar portion. The upper end and lower end are fixed to the internal side faces of the cabinet 2 respectively by rack fixing portions 49 and 50. Further, in the gear case 42, by combining with the pinion 44, the rotary motion by the stepping motor 41 is transformed into parallel motion to move the display unit 6 upward and downward.

The pattern lines 60 to 62 will be described next which are displayed while being varied and stopped respectively in the variable display portions 21 to 23 in the liquid crystal display 5.

Three pattern lines are displayed in the liquid crystal display 5 while being varied and stopped. The pattern line 60 is displayed in the variable display portion 21 while being varied. The pattern line 61 is displayed in the variable display portion 22 while being varied. The pattern line 62 is displayed in the variable display portion 23 while being varied. Then, by using the pattern lines 60 to 62, a general game and bonus game described later are carried out.

The pattern lines 60 to 62 have arrangements of the same patterns, and are comprised of eleven patterns obtained by combining a triple bar 63, cherry 64, double bar 65, seven 66, single bar 67 and blank (area with no pattern existing) as appropriate.

The pattern line 61 is the same as the pattern lines60 and 62 in the respect that the triple bar 63, cherry 64, double bar 65, seven 66, single bar 67 and blank are combined, and further has another pattern, trigger symbol 69. The trigger symbol 69 is a pattern to shift to a bonus game, and enables the shift to the bonus game as described later when stopped and displayed on an effective prize line L in the variable display portion 22.

The bonus game is a game to perform after playing the general game, and generally an advantageous game to the player. Herein, when shifting to the bonus game, without betting the credit and the like, fifteen to twenty five games are automatically carried out consecutively (so-called free games) corresponding to a result of a drawing at the time of shifting to the bonus game.

Then, when the pattern lines 60 to 62 scrolled respectively in the variable display portions 21 to 23 are stopped and displayed, three stopped patterns are displayed respectively in the variable display portions 21 to 23. The stopped and displayed patterns are determined in advance according to a result of an internal drawing, and based on the result, display in the liquid crystal display 5 is controlled.

Further, various wining roles are preset based on a plurality of kinds of combinations of the patterns, and when a combination of patterns corresponding to a wining role is stopped on the effective prize line L (see FIG.1), the credit is added corresponding to the wining role.

A structure according to a control system of the slot machine 1 will be described below based on FIG.7. FIG.7 is a block diagram schematically showing the control system of the slot machine according to this embodiment.

In FIG.7, the control system of the slot machine 1 is configured basically with the CPU 71 as a core, and the CPU 71 is connected to ROM 72 and RAM 73. The ROM 72 stores a main processing program as described later, general game processing program, bonus game processing program, processing program to raise and lower the display unit 6, drawing table to select stopped and displayed patterns in the general game and bonus game, default position of the display unit 6, other various programs required to control the slot machine 1, data table ahd the like. Further, the RAM 73 is memory to temporarily store various data computed in the CPU 71.

The CPU 71 is further connected to a clock pulse generating circuit 116 that generates a reference clock pulse and divider 117, and a random-number generator 118 that generates random numbers and random-number sampling circuit 119. The random numbers sampled via the random-number sampling circuit 119 are used in various drawings for wining roles and the like. Further, the CPU 71 is connected to the C/P switch 75 provided in the C/P button 25, help switch 76 provided in the help button 26, bet switch 77 provided in the bet button 28, max bet switch 78 provided in the max bet button 29, repeat bet switch 79 provided in the repeat bet button 30, up switch 81 provided in the up button 32, and down switch 82 provided in the down button 33. Based on the switch signal output from each switch by the button being pressed, the CPU 71 performs control to execute corresponding one of various operations.

The CPU 71 is further connected to the coin sensor (game medium detecting portion; game medium detecting means)83 disposed in the coin inserting slot 27. The coin sensor 83 detects a coin inserted from the coin inserting slot 27, and calculates the number of inserted coins based on a coin detecting signal output from the coin sensor 83.

The CPU 71 is further connected to the IR sensor 10 disposed at the upper portion of the liquid crystal display 5. The IR sensor 10 detects a player sitting at the front of the slot machine 1 (see FIGs.13 and 14), and based on a player detecting signal output from the IR sensor 10, the CPU 71 controls the stepping motor 41 as described later to adjust the height of the liquid crystal display 5 (see FIG.10).

The CPU 71 is further connected to the position detecting sensor 35 that detects a current position of the display unit 6. Based on a detecting signal output from the position detecting sensor 35, the CPU 71 controls the stepping motor 41 as described later.

The CPU 71 is further connected to a timer (a counting portion; counting means) 36 that counts the time. The timer 36 is time counting means for counting the time from the time a coin stored(accumulated) in the coin reservoir portion(accumulation portion) 85 becomes "0 credit" as described later, and the time information of the timer 36 is transmitted to the CPU 71. Then, based on the time information of the timer 36, the CPU controls up and down of the display unit 6 as described later.

The CPU 71 is further connected to the hopper 84 via a hopper driving circuit 100. When a driving signal is output to the hopper driving circuit 100 from the CPU 71, the hopper 84 pays a predetermined number of coins from the coin paying outlet 17.

The CPU 71 is further connected to the coin reservoir portion 85 and coin detecting portion 86 via a pay-out completion signal circuit 101. The coin reservoir portion 85 is a circuit to store as a credit a coin such as a dime inserted from the coin inserting slot 27 and a coin given as a bonus, and is capable of storing coins as the credit up to the predetermined maximum permissible number. Meanwhile, the coin detecting circuit 86 is a circuit to count coins to pay out from the hopper 84.

In providing a coin as a bonus, when the pay-out completion signal circuit 101 senses completion of the coin being stored as the credit or being paid out from the hopper 84 respectively via the coin reservoir portion 85 or coin detecting portion 86, the circuit 101 outputs a pay-out completion signal indicative of the completion to the CPU 71. Further, in paying out the coin stored as the credit, when the pay-out completion signal circuit 101 senses completion of the coin stored as the credit being paid out from the hopper 84 via the coin reservoir portion 85 or coin detecting portion 86, the circuit 101 outputs a pay-out completion signal indicative of the completion to the CPU 71.

The CPU 71 is further connected to the liquid crystal display 5 via a liquid crystal driving circuit 103, and the liquid crystal display 5 is controlled by the CPU 71.

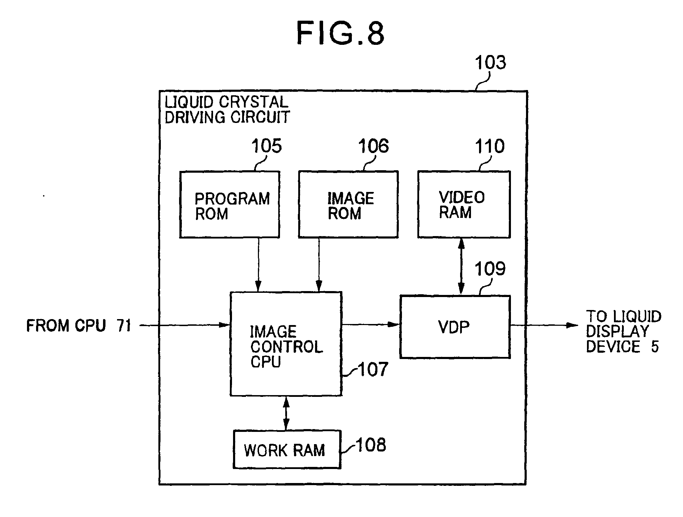

In this respect, as shown in FIG.8, the liquid crystal driving circuit 103 is comprised of program ROM 105, image ROM 106, image control CPU 107, work RAM 108, VDP (Video Display Processor) 109, video RAM 110 and the like. The program ROM 105 stores an image control program and various selection tables on display in the liquid crystal display 5. The image ROM 106 stores dot data to form images such as the pattern lines 60 to 62 (see FIG.6) displayed in the liquid crystal display 5, for example.

Based on parameters set by the CPU 71, the image control CPU 107 determines images to display in the liquid crystal display 5 from among the dot data beforehand stored in the image ROM 106, according to the image control program beforehand stored in the program ROM 105. The work RAM 108 is configured as temporarily storing means when the image control CPU 107 executes the image control program. The VDP 109 forms images in response to the display content determined by the image control CPU 107 to output to the liquid crystal display 5. By this means, for example, the pattern lines 60 to 62 to display in the liquid crystal display 5 are scrolled and displayed. In addition, the video RAM 110 is configured as temporarily storing means when the VDP 109 forms the images.

The CPU 71 is further connected to the speakers 4L and 4R via the speaker driving circuit 111, and the speakers 4L and 4R generate various sound effects in performing various stages based on output signals from the speaker driving circuit 111.

The CPU 71 is further connected to the stepping motor 41 that raises and lowers the display unit 6 via the motor driving circuit 112. When the CPU 71 outputs a motor driving signal to the motor driving circuit 112, the stepping motor 41 is supplied with a pulse signal from the motor driving circuit 112, and based on the pulse signal, driven to rotate in a predetermined rotation direction (two directions i.e. forward and reverse directions). The pinion 44 whereby rotates on the tooth flank 47 of the rack 40 (see FIG.5), whereby moving the display unit 6 upward or downward.

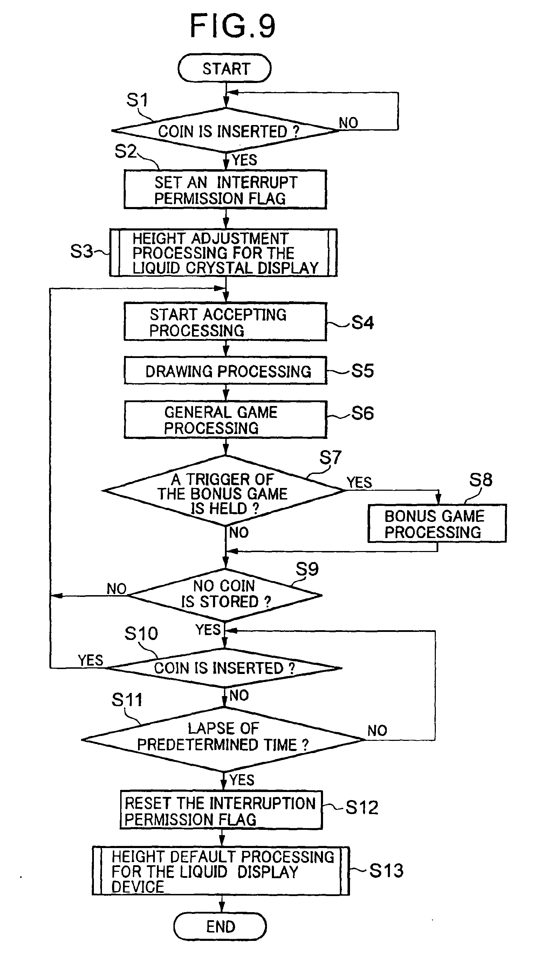

Based on FIG.9, described next is the main processing program performed in the slot machine 1 with the above-mentioned configuration. FIG.9 shows a flowchart of the main processing program of the slot machine 1 according to this embodiment. In addition, programs shown by flowchart in FIGs.9 to 12 are stored in the ROM 72 and RAM 73 provided in the slot machine 1 and executed by the CPU(value varying portion; value varying means; value detecting portion; value detecting means; a driving control portion; driving control means) 71.

First, in step (hereinafter, abbreviated as S) 1, it is judged whether or not a coin (such as a dime) is inserted in the coin inserting slot 27. In the slot machine 1 according to this embodiment, when a coin is inserted in the coin inserting slot 27, the coin sensor 83 detects the insertion, and outputs the coin detecting signal to the CPU 71. The CPU 71 whereby judges insertion of a coin by a player.

When a coin is not inserted (S1:NO), the CPU 71 waits for insertion. Meanwhile, a coin is inserted (S1:YES), the processing flow proceeds to S2. In addition, the coin inserted from the coin inserting slot 27 is stored as a corresponding credit (for example, one credit per dime) in the coin reservoir portion 85.

In S2, an interruption permission flag is set that permits interrupt processing (see FIG.12) as described later. Herein, on the condition that the interrupt permission flag is set, the interrupt processing as shown in FIG.12 is performed periodically (for example, at intervals of 4 ms). As described later, the interrupt processing is to raise and lower the display unit 6 based on the switching operation of the up button 32 and down button 33.

Next, performed in S3 is height adjustment processing for the liquid crystal display as shown in FIG.10. In the height adjustment processing for the liquid crystal display, based on a result of detection of the IR sensor 10, the display unit 6 is raised and/or lowered to place the liquid crystal display 5 at a position adapted to the height of the head of the player.

Subsequently, start accepting processing is performed in S4. The processing is to accept switch signals output from the bet switch 77, maxbet switch 78, repeat bet switch 79 and start switch 80, based on the operation of bet button 28, max bet button 29, repeat bet button 30 and start button 31. Then, at the time of receiving the switch signal output from the repeat bet switch 79 or start switch 80, the game is started with the number of set bets or the same number of bets as in the last time.

Various drawing processing is performed in S5, based on the switch signals output from the bet switch 77, maxbet switch 78, repeat bet switch 79 and start switch 80. More specifically, a drawing is held for a wining role in a general game using the variable display portions 21 to 23, using a random number sampled in the random-number sampling circuit 119 and a predetermined drawing table, and patterns to stop and display are whereby determined. Further, based on a combination of patterns stopped and displayed on the effective prize line L, the wining role and a dividend of the role are judged.

Next, general game processing is performed in S6. In the general game processing, variable display portions 21 to 23 start variable display of the pattern lines 60 to 62, and patterns are stopped and displayed based on a result of the drawing in the drawing processing in S5 after a lapse of predetermined time. Further, based on a combination of the patterns stopped and displayed on the effective prize line L, the credit is paid out corresponding to the predetermined dividend.

It is judged in S7 whether or not a trigger of the bonus game is won as a result of the drawing in S5. More specifically, when wining a role of the bonus game such that the trigger symbol 69 is stopped and displayed on the effective prize line L determined in the drawing processing in S2 (S7:YES), the processing flow proceeds to S8, a bonus game establishing flag is set that is reserved in the RAM 73, and for example, the letter of "START BONUS GAME!" is displayed in the liquid crystal display 5. A message of establishment of the bonus game is whereby notified, and the bonus game processing is then performed (S8). In the bonus game processing, corresponding to the number of games set by a drawing, the so-called free game is performed such that the pattern lines 60 to 62 are varied while being stopped to display successively without consuming the credit, and that the credit is paid out corresponding to the dividend (a value of the game medium stored in the coin reservoir portion 85 is varied).

Meanwhile, when the trigger of the bonus game is not won (S7:NO), the processing flow proceeds to S9.

It is judged in S9 whether or not the number of credits of coins currently stored in the slot machine 1 is "0" (i.e. 0 credit)(the value of the game medium stored in the coin reservoir portion 85 is detected). Herein, in finishing the game, the player generally presses the C/P button 25 to cause a stored coin(s) to be paid out except the case where the number of credits of stored coins is "0". Accordingly, in the judgment processing in S9, by judging whether the number of credits stored in the coin reservoir portion 85 is "0" i.e. "0 credit" at the end of the game, it is determined whether the game is finished or not.

When the coin is stored (S9:NO), the processing flow returns to S4 to perform the start accepting processing again, whereby moving to a next game.

Meanwhile, when the coin is not stored (S9:YES), it is judged whether or not a coin (for example, a dime) is inserted in the coin inserting slot 27 successively (S10). In other words, even when the storage of coin temporarily becomes "0 credit", the player who newly inserts a coin immediately after "0 credit" is a person hoping to play the game continuously, and it is not determined that the player finishes the game.

Accordingly, when a coin is inserted (S10:YES), the processing flow returns to S4 to perform the start accepting processing again, whereby moving to a next game. In contrast thereto, when a coin is not inserted (S10:NO), it is judged whether or not a predetermined time (30 seconds in this embodiment) elapses after judging that the coin is not stored in S9, based on the information of timer 36 (S11). Then, when it is judged that the predetermined time does not elapse (S11:NO), the processing flow returns to S10 to detect insertion of a coin. Accordingly, even when the number of credits of stored coins becomes "0 (0 credit)" once, newly inserting a coin during a predetermined time enables an adjustment of the image display device to be performed continuously, whereby improving the advantage to the player.

Meanwhile, when it is judged that the predetermined time has elapsed with no coin inserted (S11:YES), reset is the interruption permission flag to permit the interrupt processing (see FIG.12) described later set in S2 (S12). By resetting the interruption permission flag, such control is performed that the display unit 6 is not raised nor lowered based on the operation of the up button 32 and down button 33 after the game is finished. Accordingly, the fear is eliminated that the display unit 6 of the slot machine 1 is raised and/or lowered by a third person having no intention to play for a period until a next player starts a game.

Further, performed in S13 is height default processing for the liquid crystal display as shown in FIG.11. In the height default processing for the liquid crystal display, the display unit 6 raised by the player is restored to the default position (such that the unit 6 is most lowered for the cabinet 2 (see FIG.2)) as described later. Then, the processing is finished.

Based on FIG.10, described next is a height adjustment processing program for the liquid crystal display in S3 performed in the slot machine 1. FIG.10 is a flowchart of the height adjustment processing program for the liquid crystal display according to this embodiment.

In the height adjustment processing for the liquid crystal display, it is first judged in S21 whether a player playing the game is detected based on the detecting signal of the IR sensor 10. Then, when the player playing the game is detected (S21:YES), a pulse signal forming a forward-rotation cycle is input to the stepping motor 41, whereby starting forward rotation of the stepping motor 41 (S22) . Herein, the forward rotation is rotation of the stepping motor 41 in the rotation direction to raise the display unit 6 for the cabinet 2 (the pinion 44 moves upward for the rack 40 (see FIG.5).)

FIG.13 is a schematic view illustrating the operation of the slot machine 1 when the IR sensor 10 detects the player playing the game at the time of starting the game. As shown in FIG.13, in the slot machine 1 according to this embodiment, the IR sensor 10 is attached to the upper end portion of the front panel 7 of the display unit 6 while being inclined upward a predetermined angle. At the time of inserting a coin to start the game, the display unit 6 is in the lowest position (with the front panel 7 brought into contact with the cabinet 2) relative to the cabinet 2 by the height default processing for the liquid crystal display (see FIGs.9 and 11) in S13 performed when the last player finishes the game. In addition, in this embodiment, the default position of the display unit 6 is the lowest position.

Then, when the IR sensor 10 detects the player 120 playing the game as shown in FIG.13, in order to adjust the liquid crystal display 5 to be a position easily viewable and suitable for an eye level of the player, the display unit 6 is raised with respect to the cabinet 2.

Meanwhile, when the player playing the game is not detected (S21:NO), a position of the head of the player 120 is positioned lower than a position detectable by the IR sensor 10, the game is whereby started with the display unit 6 existing in the lowest position that is the default position, and the processing flow proceeds to the start accepting processing in S4.

Further, in S23, based on the detecting signal of the IR sensor 10, it is judged whether the player plying the game is detected or not, more specifically, whether the adequate position to the player is detected or not. In this case, said adequate position may be obtain when scanning range of the IR sensor 10 exceeds the player's head. Then, when the player playing the game(the adequate position to the player) is detected (S23:YES), based on a result of detection of the position detecting sensor 35, it is further judged whether or not the display unit 6 is in the highest position relative to the cabinet 2 (see FIG.3) (S24).

Then, when the unit 6 is in the highest position (S24:YES), the display unit 6 cannot be raised further, the processing flow whereby proceeds to S25, and input of the pulse signal is halted to halt the forward rotation of the stepping motor 41. In contrast thereto, when the unit 6 is not in the highest position (S24:NO), the processing flow returns to S23, the pulse signal forming a forward-rotation cycle is continuously input to the stepping motor 41 to rotate the stepping motor 41 forward.

Meanwhile, when the player playing the game is not detected (S23:NO), the position of the head of the player 120 reaches a position lower than a position detectable by the IR sensor 10, and input of the pulse signal is halted to halt the forward rotation of the stepping motor 41 (S25).

FIG.14 is a schematic view showing the slot machine 1 such that the liquid crystal display 5 is in a height suitable for the player 120 as a result of raising the display unit 6 from the default position. When the display unit 6 is raised from the default position as shown in FIG.13, the position of the head of the player 120 reaches a position lower than a position detectable by the IR sensor 10 as shown in FIG.14 after a lapse of predetermined time. At this point, by halting raising of the display unit 6, it is possible to place the liquid crystal display 5 in a position easily viewable and suitable for the eye level of the player.

In addition, after the display unit 6 is stopped, the player is capable of manually moving the display unit 6 upward and/or downward respectively by pressing the up button 32 and/or down button 33 during a period until the game is finished (see FIG.12). Accordingly, after the automatic adjustment of matching to the position of the player's head, it is possible to further make a fine height adjustment by the player's intention.

Based on FIG.11, described next is a height default processing program for the liquid crystal display in S13 performed in the slot machine 1. FIG.11 is a flowchart of the height default processing program for the liquid crystal display according to this embodiment.

In the height default processing for the liquid crystal display, first in S31, based on a result of the position detecting sensor 35, it is judged whether or not the display unit 6 of the slot machine 1 is currently in the default position (the lowest position relative to the cabinet 2). Such a judgment is made by determining whether or not a current position of the display unit 6 detected by the position detecting sensor 35 agrees with the default position stored in the ROM (storage portion; storage means) 72. Then, when the display unit 6 is judged as being in the default position (S31:YES), the height default processing for the liquid crystal display is finished in this state.

Meanwhile, when the display unit 6 is not judged as being in the default position (S31:NO), a pulse signal forming a reverse-rotation cycle is input to the stepping motor 41 to start reverse rotation of the stepping motor 41 (S32). Herein, the reverse rotation is rotation in the reverse direction to the forward rotation, and rotation of the stepping motor 41 in the rotation direction to lower the display unit 6 for the cabinet 2 (the pinion 44 moves downward for the rack 40 (see FIG.5).)

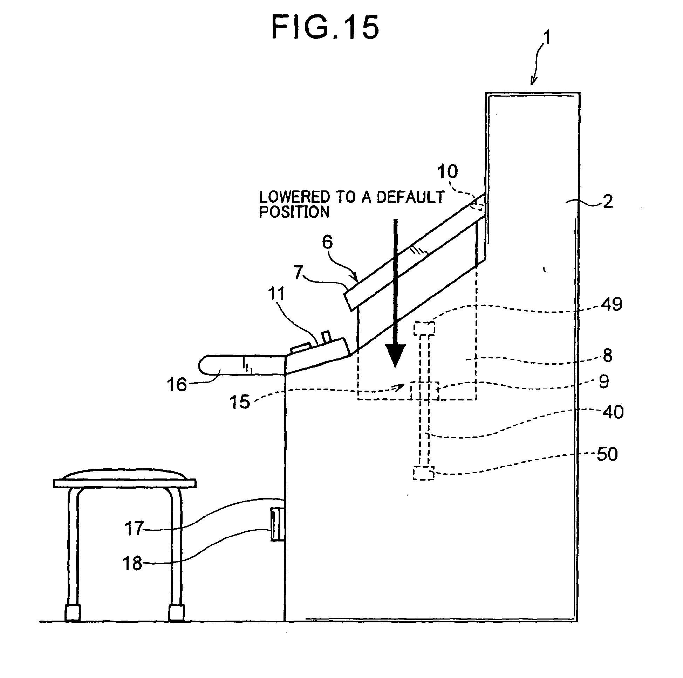

FIG.15 is a schematic view illustrating the operation of the slot machine 1 when the player 120 finishes the game. As shown in FIG.15, when the game by the player is judged as being finished (S11:YES), the slot machine 1 according to this embodiment lowers the liquid crystal display 5 to the default position for use of a next player. In addition, the slot machine 1 displays a predetermined demonstration screen for a period during which no player plays the game. By adjusting display units 6 uniformly to the default position, even when a plurality of slot machines is installed in a line in a game store, any differences do not arise in visibility of the screens due to the problem of viewing angle, and heights of the screens are aligned, whereby not causing disfigurement.

Further, in S33, based on a result of detection of the position detecting sensor 35, it is judged whether or not the display unit 6 of the slot machine 1 is currently in the default position. When the display unit 6 is not judged as being in the default position (533:NO), the pulse signal forming a reverse-rotation cycle is continuously input to the stepping motor 41 to rotate the stepping motor 41 reversely.

Meanwhile, when the display unit 6 is judged as being in the default position (S33:YES), input of the pulse signal is halted to halt the reverse rotation of the stepping motor 41 (S34) . By this means, the display unit 6 moved upward/downward during the game returns to the default position when the player finishes the game.

The interrupt processing program performed in the slot machine 1 according to this embodiment will be described below based on FIG.12. FIG.12 is a flowchart of the interrupt processing program in the slot machine according to this embodiment.

The interrupt processing program is executed at intervals of predetermined time, for example, every 4 ms, during the execution of the main processing program for a period between the interruption permission flag is set (S2) and then reset (S12). Then, monitored are presses of the up button 32 and down button 33, and when the up button 32 or down button 33 is pressed, based on the press, switching operation is performed to raise or lower the display unit 6.

In the interrupt processing program, first in S41, the CPU 71 judges whether the up button 32 is pressed or not based on the switch signal from the up switch 81. Then, when the CPU 71 judges that the up button 32 is pressed (S41:YES), the processing flow proceeds to S42.

In S42, based on a result of detection by the position detecting sensor 35, it is judged whether the display unit 6 is in the highest position (see FIG.3) relative to the cabinet 2. Then, when the unit 6 is in the highest position (S42:YES), the display unit 6 cannot be raised further, and the interrupt processing is finished in this state. In contrast thereto, when the unit 6 is not in the highest position (S42:NO), the pulse signal forming a forward-rotation cycle is input to the stepping motor 41 to start forward rotation of the stepping motor 41 (S43) . The display unit 6 is whereby raised at predetermined speed (for example, 1 cm/sec) with respect to the cabinet 2.

Subsequently, in S44, based on the switch signal from the up switch 81, the CPU 71 judges whether the press of the up button 32 is released or not. When the CPU 71 judges that the up button 32 is continuously pressed (S44:NO), the pulse signal forming a forward-rotation cycle is input continuously to the stepping motor 41 to rotate the stepping motor 41 forward. In contrast thereto, when the CPU 71 judges that the up button 32 is released (S44:YES), input of the pulse signal is halted to halt the forward rotation of the stepping motor 41 (S45). The player is whereby capable of positioning the liquid crystal display 5 in a desired height by the player's intention.

Meanwhile, when the up button 32 is not judged as being pressed (S41:NO), it is subsequently judged whether the down button 33 is pressed or not based on the switch signal from the down switch 82 (S46). Then, when the down switch 33 is judged as being pressed (S46:YES), the processing flow proceeds to S47. Further, when the down button 33 is not judged as being pressed (S46:NO), the interrupt processing is finished.

In S47, based on a result of detection by the position detecting sensor 35, it is judged whether the display unit 6 is in the lowest position (default position, see FIG.2) relative to the cabinet 2. Then, when the unit 6 is in the lowest position (S47:YES), the display unit 6 cannot be lowered further, and the interrupt processing is finished in this state. In contrast thereto, when the unit 6 is not in the lowest position (S47:NO), the pulse signal forming a reverse-rotation cycle is input to the stepping motor 41 to start reverse rotation of the stepping motor 41 (S48). The display unit 6 is whereby lowered at predetermined speed (for example, 1 cm/sec) with respect to the cabinet 2.

Subsequently, in S49, based on the switch signal from the down switch 82, the CPU 71 judges whether the press of the down button 33 is released or not. When the CPU 71 judges that the down button 33 is continuously pressed (S49:NO), the pulse signal forming a reverse-rotation cycle is input continuously to the stepping motor 41 to rotate the stepping motor 41 reversely. In contrast thereto, when the CPU 71 judges that the press of the down button 33 is released (S49:YES), input of the pulse signal is halted to halt the reverse rotation of the stepping motor 41 (S50). The player is whereby capable of positioning the liquid crystal display 5 in a desired height by the player's intention.

As described above, in the slot machine 1 according to this embodiment, when a coin such as a dime is inserted in the coin inserting slot 27 to start a game, the IR sensor 10 provided on the front panel 7 detects a position of the head of the player 120 playing the game, and the display unit 6 is raised and/or lowered by controlling the rotation of the stepping motor 41 so that the liquid crystal display 5 is placed in accordance with the position (S21 to S25) . Therefore, when the player starts the game, it is possible to automatically adjust the height of the liquid crystal display 5 to a position considered the most easily viewable to the player. That is to say, in the game machine 1 of this embodiment, a position is detected of the head of a player playing the game, and based on the detected position of the head of the player, a position of the image display device is adjusted with respect to the housing. Accordingly, the player is capable of playing the game in suitable game environments adapted to his/her own body height and/or seated height, and the advantage is improved while his/her willingness to play the game is enhanced. In particular, when display is performed in a liquid crystal display with the problem of viewing angle as in this embodiment, the display screen becomes easily viewable and the advantageous effect is significant.

Further, when the game is finished, the display unit 6 having the liquid crystal display 5 is restored to the predetermined default position (the lowest position relative to the cabinet 2 in this embodiment) (S31 to S34) . That is to say, the image display device is moved to the predetermined default position when a value of the stored game medium becomes a state of disabling continuation of the game. Therefore, in order for a next player to adjust the height easily in starting the game, it is possible to restore the height of the liquid crystal display 5 automatically to the original position prior to adjustments. Furthermore, in displaying a predetermined demonstration image for a period during which any player does not play the game, by adjusting display units 6 uniformly to the default position, even when a plurality of slot machines is installed in a line in a game store, any differences do not arise in visibility of the screens due to the problem of viewing angle, and heights of the screens are aligned, whereby not causing disfigurement.

Moreover, it is possible to adjust the height of the liquid crystal display 5 by moving the display unit 6 upward and/or downward using the up button 32 and/or down button 33 (S43 and S48) for a period until a predetermined time elapses (until the game is finished) after a coin is inserted and the stored coin is consumed. It is whereby possible to adjust the height to a desired position by the player's hand, in addition to the automatic adjustment. Accordingly, the player playing the game is capable of changing the height freely by his/her own intention, while a third person who does not intend to play the game is not capable of raising and/or lowering the display unit 6, and it is thus possible to prevent a nuisance by the third person. That is to say, in the game machine 1 of this embodiment, such control is performed that the switching operation on the driving source by the operation portion is enabled in case of a game medium being inserted in the housing, while being disabled in case of the stored game medium becoming a state of disabling the game, and it is thus possible for the player to adjust an image display device to a desired position by the player's hand, while not allowing a third person with no intention to play the game to change the position.

Further, even when the stored coin is once consumed, newly inserting a coin within a predetermined time (30 seconds in this embodiment) (S10:YES) enables a height adjustment of the liquid crystal display 5 to be performed continuously without judging that the game is finished, whereby improving the advantage to the player.

In addition, in the slot machine according to this embodiment, the display unit 6 is raised or lowered during a period of pressing respectively the up button 32 or down button 33, but may be raised or lowered by a predetermined distance whenever pressing the button.

Moreover, in the slot machine according to this embodiment, a video-reel type slot machine is exemplified as a game machine according to the invention where a game is carried out by displaying pattern images in the liquid crystal display 5. However, the invention is applicable to a slot machine using a mechanical reel, and further, naturally applicable to various game machines such as a poker game machine and horse racing game machine other than the slot machine.

Further, in the slot machine 1 according to this embodiment, the default position is of state where the display unit 6 is most lowered with respect to the cabinet 2. However, the default position is not limited to such a position, and may be of state where the display unit 6 is most raised with respect to the cabinet 2, for example.

Furthermore, in the slot machine according to this embodiment, the interruption permission flag is reset (S12) after a lapse of predetermined time since the number of credits of stored coins is detected as "0 credit" (S9:YES). However, the flag may be reset immediately after the number of credits of stored coins is detected as "0 credit".

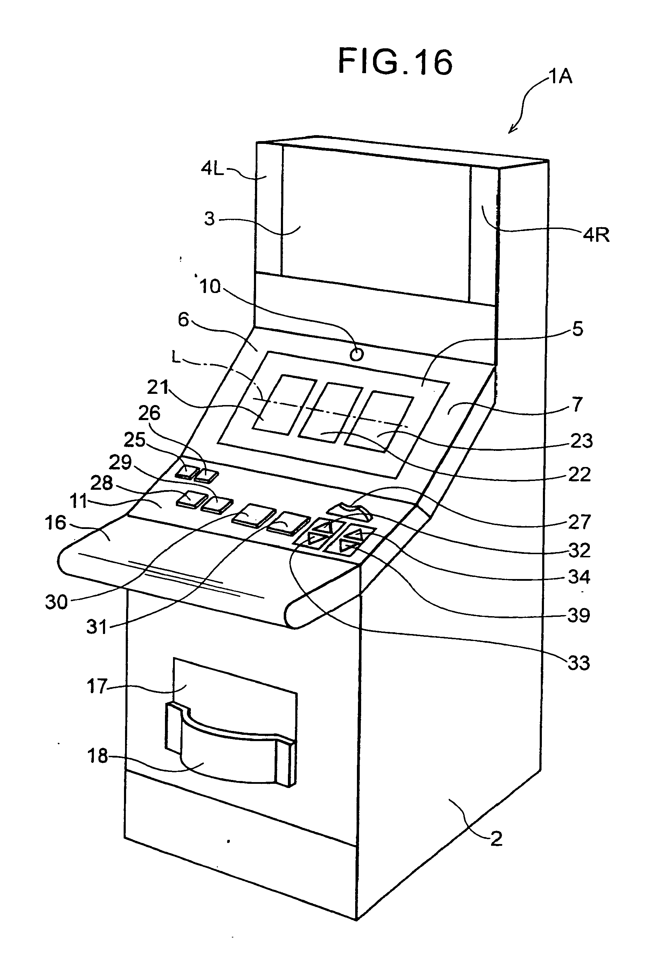

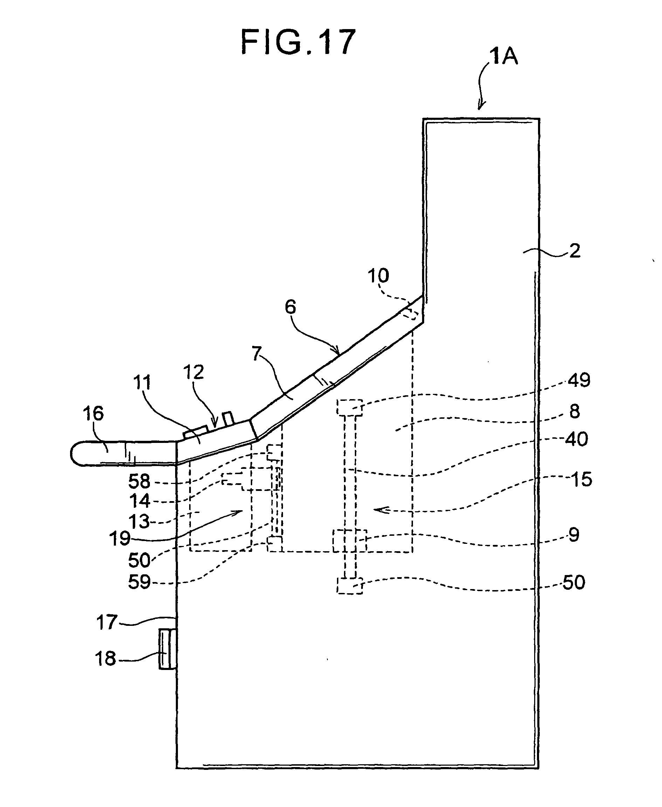

Based on FIGs.16 to 19, described below is a schematic configuration of a slot machine 1A according to the second embodiment. FIG.16 is a perspective view of the slot machine according to this embodiment, and FIGs.17 to 19 are side views of the slot machine 1A according to this embodiment. In addition, in this embodiment, the same structural portions as in the first embodiment are assigned the same reference numerals to omit descriptions thereof.

In the slot machine 1A of this embodiment, below the display unit 6 is provided a control unit 12 having the control panel 11 such that various operation buttons are arranged on the panel. Herein, the control unit 12 is basically comprised of the control panel 11, a controller base portion 13 that supports the control panel 11 on its upper face inclined a predetermined angle inside the cabinet 2, a second driving mechanism portion 14 that is a driving source to raise and lower the control unit 12 and that is provided at the lower end of the controller base portion 13, and an arm rest 16 that is formed being continuous to the front side of the control panel 11.

The display unit 6 and control unit 12 are supported to be able to integrally move upward and downward with respect to the cabinet 2 via the base portion (hereinafter, referred to as a display base portion) 8, and configured to be raised and lowered electrically by transforming rotation driving of the stepping motor (hereinafter, referred to as a first stepping motor) 41 into parallel motion in the vertical direction by the elevating unit (hereinafter, referred to as a first elevating unit) 15 comprised of the driving mechanism portion (hereinafter, referred to as a fist driving mechanism portion) 9 and the rack 40 provided inside the cabinet 2.

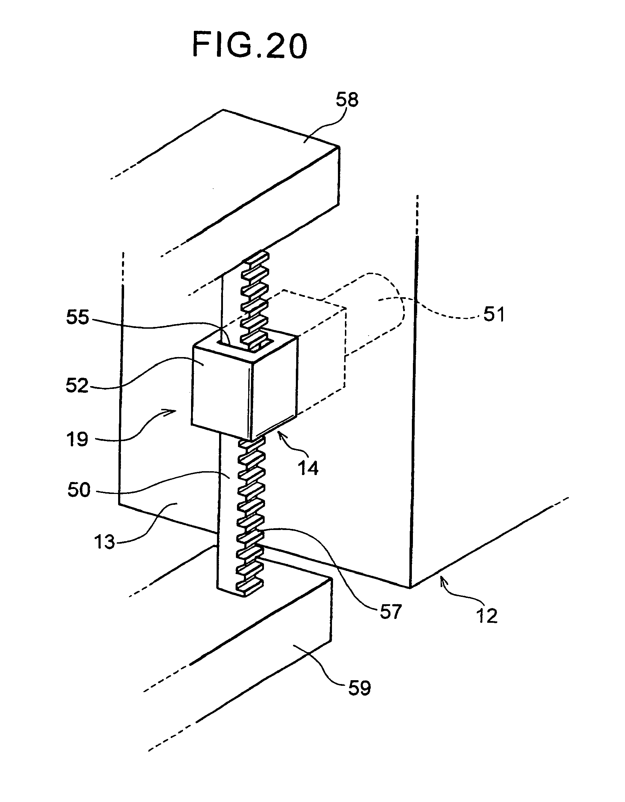

Meanwhile, the control unit 12 is supported to move upward and downward relatively to the display unit 6 via the controller base portion 13 in addition to the aforementioned structure, and configured to be raised and lowered electrically by transforming rotation driving of a second stepping motor (a second driving source; second driving means) 51 into parallel motion in the vertical direction by a second elevating unit (a second elevating apparatus; second elevating means) 19 (see FIG.20) comprised of a second driving mechanism portion 41 and a rack 50 provided on the front wall portion of the display base portion 8 as described later.

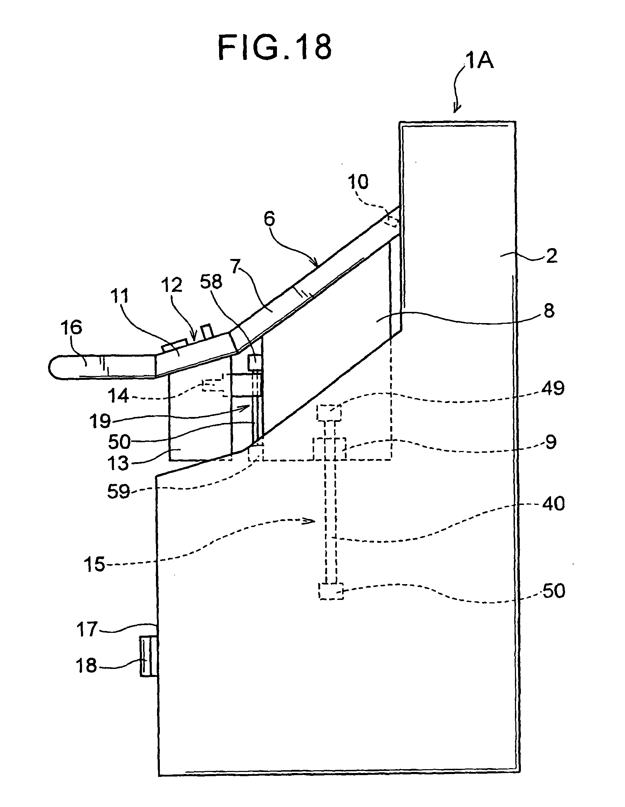

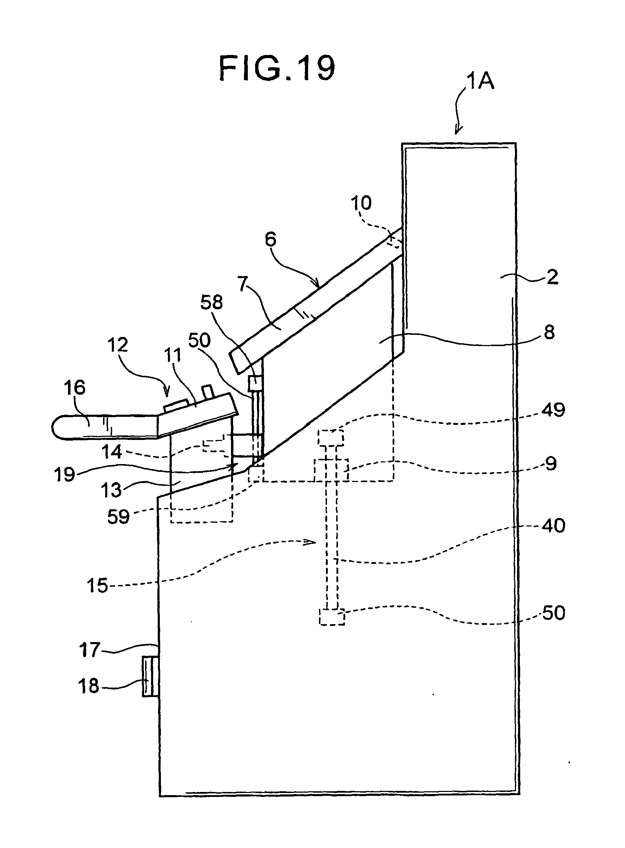

FIG.17 shows the slot machine 1A in a state (this state is "a default position of the slot machine 1A" in this embodiment) where the display unit 6 and control unit 12 are moved downward the lowest with respect to the cabinet 2 by the first elevating unit 15. FIG.18 shows the slot machine 1A in a state where the display unit 6 and control unit 12 are moved upward the highest with respect to the cabinet 2 by the first elevating unit 15. Further, FIG.19 shows the slot machine 1A where only the control unit 12 is moved downward the lowest relatively to the display unit 6 from the state of FIG.18.

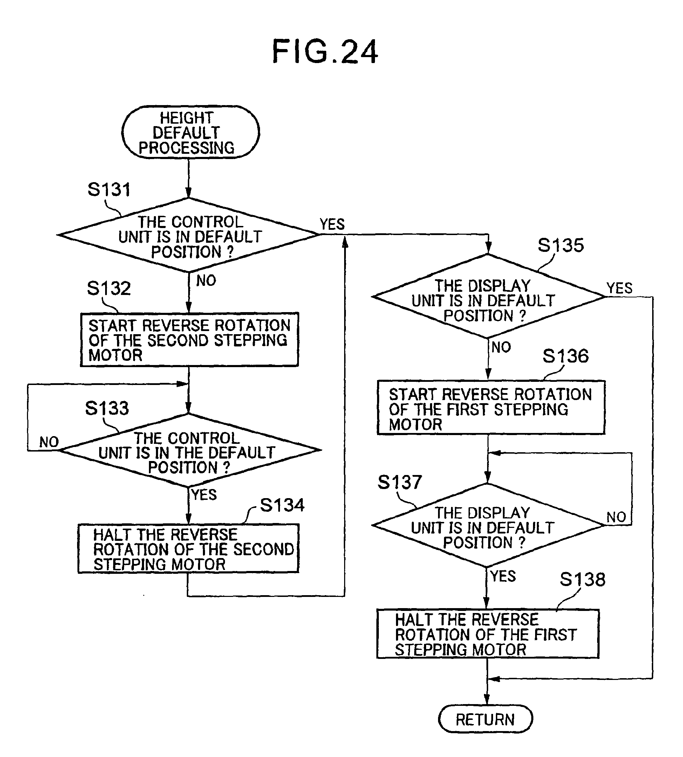

As shown in FIG.17, in the default state where the display unit 6 and control unit 12 are moved downward the lowest with respect to the cabinet 2, the front panel 7 of the display unit 6 and the control panel 11 of the control unit 12 come into contact with the cabinet 2. In addition, the display unit 6 and control unit 12 are controlled to be located in the default state after the game is finished (see FIG.24).

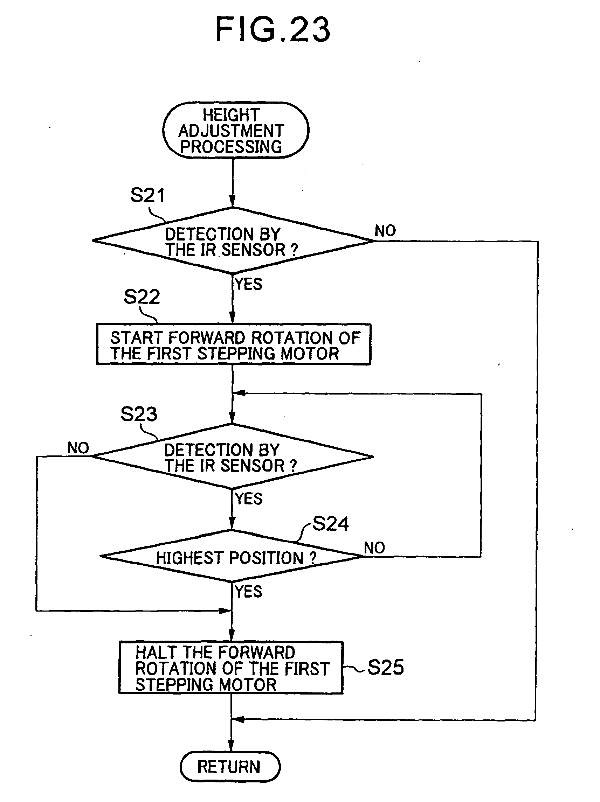

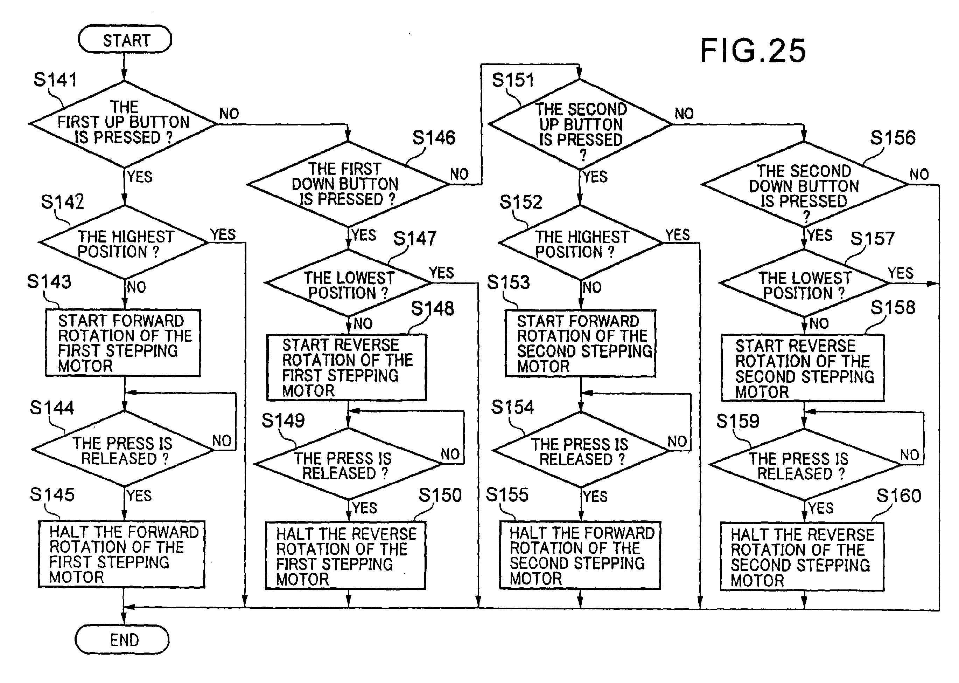

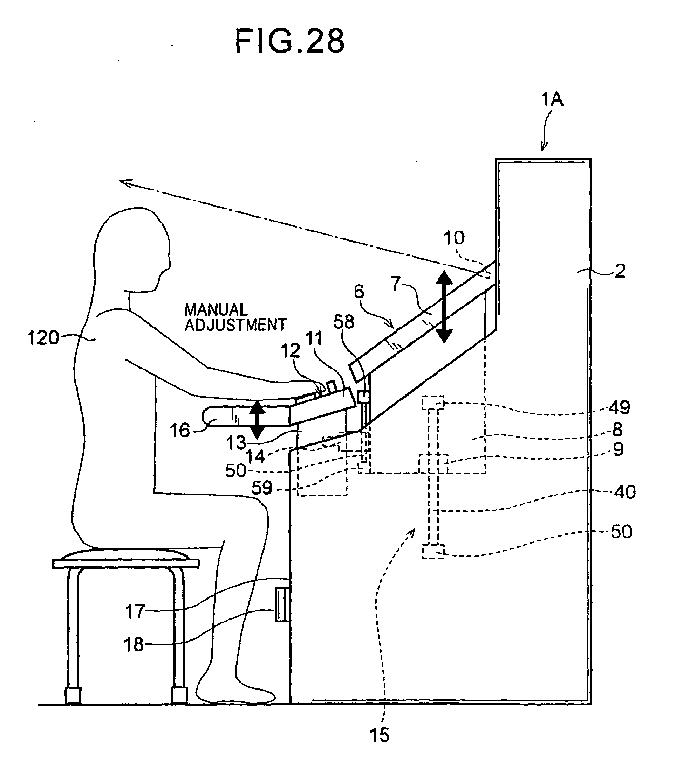

Meanwhile, as shown in FIG.18, in the state where the display unit 6 and control unit 12 are moved upward the highest with respect to the cabinet 2, the front panel 7 of the display unit 6 and the control panel 11 of the control unit 12 are spaced a predetermined distance (30cm in this embodiment) away from the cabinet 2. Then, in the slot machine 1A according to this embodiment, such control is performed that the display unit 6 and control unit 12 are integrally moved upward and downward between positions as shown in FIGs.17 and 18, and heights of the liquid crystal display 5 and control panel 11 are adjusted automatically according to a position of the head of a player (see FIG.23) when the player inserts a coin in the coin inserting slot 27. Further, heights of the liquid crystal display 5 and control panel 11 can be adjusted manually by performing switching operation on the first stepping motor 41 based on press of the up button (hereinafter, referred to as a first up button) 32 and/or down button (hereinafter, referred to as a first down button) 33, and whereby moving integrally the display unit 6 and control unit 12 upward and/or downward (see FIGs.25 and 28).

Further, as shown in FIG.19, in the slot machine 1A according to this embodiment, with a position of the display unit 6 fixed, it is possible to further move only the control unit 12 relatively. Herein, the control unit 12 is configured to be able to move upward and downward between the position where the control unit 12 is moved upward the highest with respect to the display unit 6 (of a state where the same plane continued to the display unit is formed and the position of the control unit 12 in this state is a "default position of the control unit" in this embodiment) as shown in FIGs.17 and 18, and the position (such that the control panel 11 of the control unit 12 is lower than the front panel 7 of the display unit 6 by 10 cm in this embodiment) where the unit 12 is moved downward the lowest with respect to the display unit 6 as shown in FIG.19. The up and down is carried out by performing switching operation on the second stepping motor 51 based on presses of a second up button (a second operating portion; second operating means) 34 and second down button (a second operating portion; second operating means) 39, and it is thus possible to manually adjust the height of the control panel 11 relatively to the liquid crystal display 5 (see FIGs.25 and 28) .

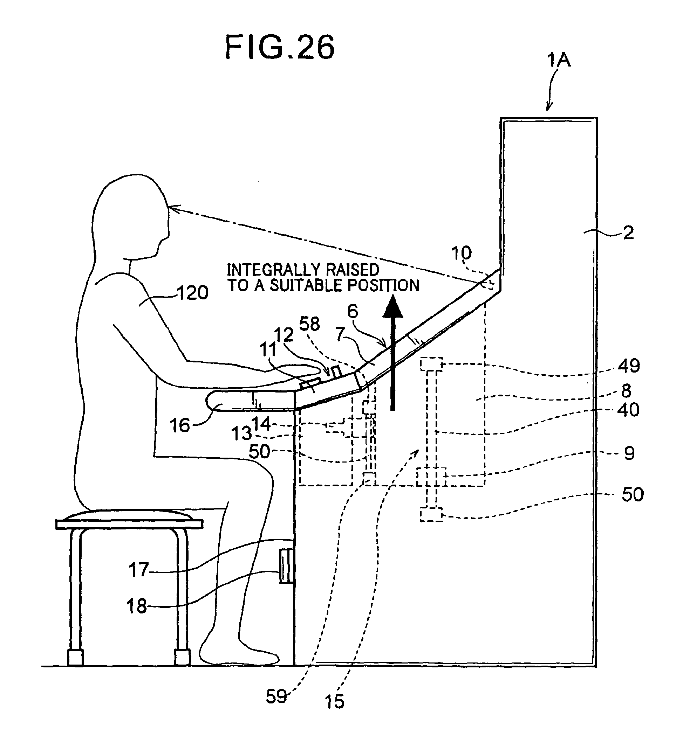

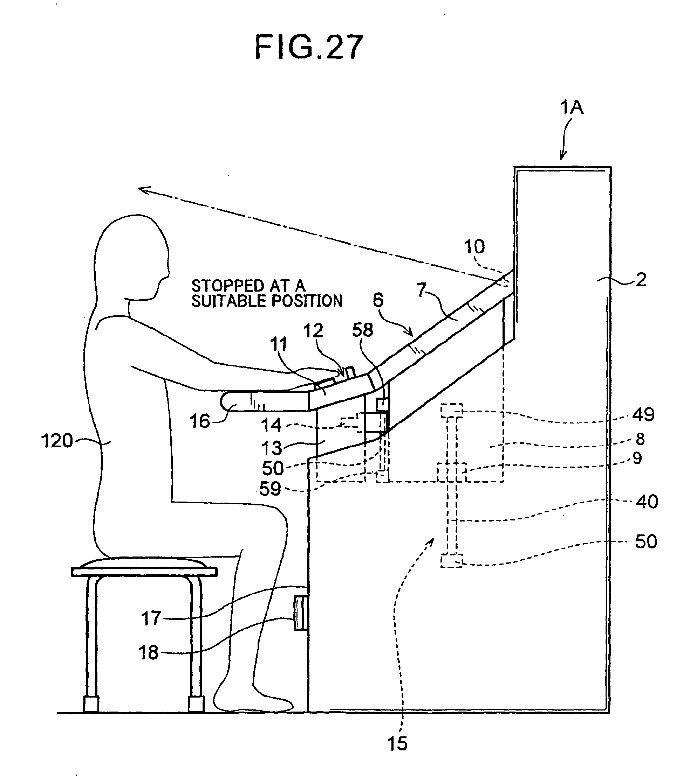

In the slot machine 1A according to this embodiment, the IR sensor 10 detects a position of the head of a player, the display unit 6 and control unit 12 are integrally moved upward and downward according to the position of the head, and heights of the liquid display unit 5 and control unit 11 are whereby set automatically (see FIGs.26 and 27). In addition, position adjustments of the liquid crystal display 5 and control panel 11 by the IR sensor 10 will specifically be described later.

At the upper stage of the control panel 11 slating gently toward the front side are provided the C/P (credit/payout) button 25 and help button 26, and the coin inserting slot 27 is provided to the right of the help button 26, as described in the first embodiment. Further, at the lower stage of the control panel 11 are provided the bet button 28, maxbet button 29, repeat bet button 30, start button 31, first up button 32 and first down button 33, and further the second up button 34 and second down button 39, in this order from the left side.

The first up button 32 and first down button 33 are buttons to operate in moving the display unit 6 and control unit 12 integrally upward or downward for the cabinet 2. When the first up button 32 is pressed, the first stepping motor 41 of the first elevating unit 15 rotates forward, and raises the display unit 6 and control unit 12 integrally for the cabinet 2 at predetermined speed (for example, 1cm/sec) during a period of time the button is pressed. Meanwhile, when the first down button 33 is pressed, the first stepping motor 41 of the first elevating unit 15 rotates reversely, and lowers the display unit 6 and control unit 12 integrally for the cabinet 2 at predetermined speed (for example, 1cm/sec) during a period of time the button is pressed. Then, in the slot machine 1A according to this embodiment, in order to prevent operation by a third person who does not play a game, raising and lowering by the first up button 32 and first down button 33 is only allowed for a period during which a predetermined time (30 seconds in this embodiment) elapses in such a state that a coin such as a dime is inserted in the coin inserting slot 27 and then the stored coin (credit) is consumed (in other words, during a period of time the player is playing the game) as described later.

Further, the second up button 34 and second down button 39 are buttons to operate in moving the control unit 12 upward or downward relatively to the display unit 6. When the second up button 34 is pressed, the second stepping motor 51 of the second elevating unit 19 rotates forward, and raises the control unit 12 relatively to the display unit 6 at predetermined speed (for example, 1cm/sec) during a period of time the button is pressed. Meanwhile, when the second down button 39 is pressed, the second stepping motor 51 of the second elevating unit 19 rotates reversely, and lowers the control unit 12 relatively to the display unit 6 at predetermined speed (for example, 1cm/sec) during a period of time the button is pressed. Then, in the slot machine 1A according to this embodiment, in order to prevent operation by a third person who does not play a game, raising and lowering by the second up button 34 and second down button 39 is only allowed for a period during which a predetermined time (30 seconds in this embodiment) elapses in such a state that a coin such as a dime is inserted in the coin inserting slot 27 and then the stored coin (credit) is consumed (in other words, during a period of time the player is playing the game) as described later.

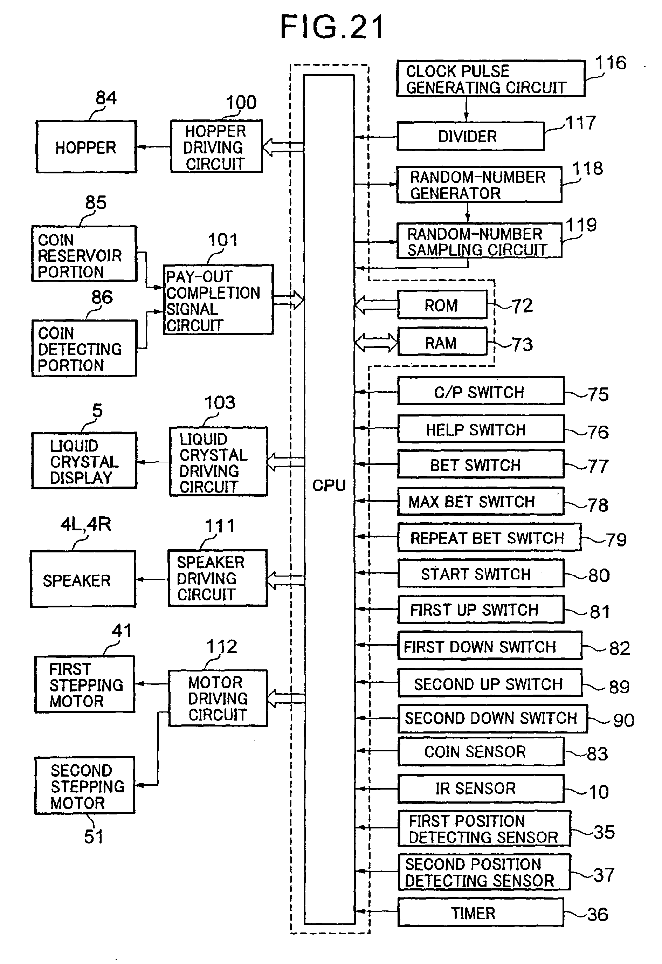

In addition, the second up button 34 and second down button 39 have internal second up switch 89 and second down switch 90 (see FIG.21), and when the second up button 34 and second down button 39 are pressed, switch signals from the second up switch 89 and second down switch 90 are output to the CPU 71, respectively, (see FIG.21).

Further, in the slot machine 1A according to this embodiment, a structure of the first elevating unit 15 to integrally move the display unit 6 and control unit 12 upward and downward is the same as in the first embodiment (see FIGs.4 and 5). In other words, by moving the first driving mechanism portion 9 a predetermined distance in the vertical direction for the rack 40, it is possible to move the display unit 6 and control unit 12 upward and downward integrally for the cabinet 2.

Based on FIG.20, described next is the second elevating unit 19 that moves the control unit 12 upward and downward relatively to the display unit 6. FIG.12 is a schematic view illustrating the second elevating unit according to this embodiment.

As described in the foregoing, the second elevating unit 19 is an apparatus to move the control unit 12 having the control unit 11 upward and downward relatively to the display unit 6 having the liquid crystal display 5. As shown in FIG.20, the second elevating unit 19 is comprised of the second driving mechanism portion 14 provided in a slightly upper position of the rear wall portion of the controller base portion 13, and the rack 50 fixed to the front wall portion of the display base portion 8.

The second driving mechanism portion 14 is comprised of the second stepping motor 51 and a gear case 52. Further, inside the gear case 52 are provided a deceleration gear portion (not shown), a pinion (not shown) and a bearing portion 55. In addition, the second driving mechanism portion 14 has the same internal structure and the same driving mechanism as in the first driving mechanism portion 9, each structural member is already described specifically, and figures and descriptions thereof are omitted.

Based on the rotation direction (two directions i.e. forward and reverse directions) and rotation angle of the second stepping motor 51, the second driving mechanism portion 14 according to this embodiment can be moved a predetermined distance in the vertical direction for the rack 50, and according to the motion, the control unit 12 is moved upward or downward relatively to the display unit 6. Further, the second stepping motor 51 is connected to the CPU 71 via the motor driving circuit 112 (see FIG.21), and driving of the motor 51 is controlled based on a program stored in ROM or the like as described later.

The rack 50 is a planar gear member formed in rod-shape, and provided with a tooth flank 57 in the longitudinal direction at one planar portion. The upper end and lower end are fixed to the front wall portion of the display base portion 8 respectively by rack fixing portions 58 and 59. Further, in the gear case 52, by combining with the pinion (not shown), the rotary motion by the second stepping motor 51 is transformed into the parallel motion to move upward and downward the control unit 12 relatively to display unit 6.

FIG.21 illustrates a configuration according to a control system of the slot machine 1A of this embodiment. The configuration is almost the same as in the first embodiment, and differs from the first embodiment in following respects. In other words, the CPU 71 is further connected to the second up switch 89 provided in the second up button 34 and the second down switch 90 provided in the second down button 39. The CPU 71 is further connected to a second position detecting sensor 37 that detects a current position of the control unit 12, as well as the position detecting sensor (hereinafter, referred to as a first position detecting sensor) 35 that detects a current position of the display unit 6. Based on detecting signals output from the first position detecting sensor 35 and second position detecting sensor 37, the CPU 71 controls the first stepping motor 41 and second stepping motor 51. In addition, the IR sensor 10 connected to the CPU 71 detects a player sitting at the front of the slot machine 1A (see FIGs.26 and 27), and based on the player detecting signal output from the IR sensor 10, the CPU 71 controls the first stepping motor 41 as described later to integrally adjust heights of the liquid crystal display 5 and control panel 11 (see FIG.23).

The CPU 71 is further connected to the first stepping motor 41 that integrally moves the display unit 6 and control unit 12 upward and downward, and the second stepping motor 51 that moves only the control unit 12 upward and downward, via the motor driving circuit 112. When the CPU 71 outputs a motor driving signal to the motor driving circuit 112, the first stepping motor 41 and second stepping motor 51 are supplied with a pulse signal from the motor driving circuit 112, and based on the pulse signal, driven to rotate in a predetermined rotation direction (two directions i.e. forward and reverse directions) . The pinion 44 in the first driving mechanism portion 9 whereby rotates on the tooth flank 47 of the rack 40 (see FIG.20), thus moving the display unit 6 and control unit integrally upward and/or downward. Further, the pinion (not shown) in the second driving mechanism portion 14 whereby rotates on the tooth flank 57 of the rack 50, thus moving the control unit 12 upward and/or downward relatively to the display unit 6.

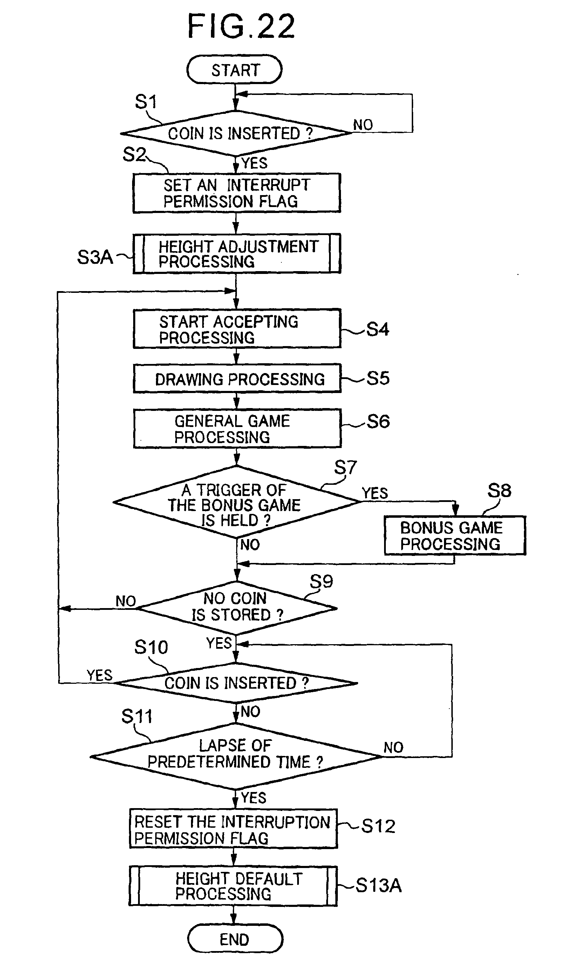

Based on FIG.22, described next is the main processing program performed in the slot machine 1A with the above-mentioned configuration. In addition, a flowchart of the main processing program of the slot machine 1A according to this embodiment as shown in FIG.22 is substantially the same as in the first embodiment as shown in FIG.9, but to facilitate understood of this embodiment, described again including the same part. In addition, programs shown by flowchart in FIGs.22 to 25 are stored in the ROM 72 and RAM 73 provided in the slot machine 1A and executed by the CPU 71.

First, in the main processing program of the slot machine 1A, in step (hereinafter, abbreviated as S) 1, it is judged whether or not a coin (such as a dime) is inserted in the coin inserting slot 27. In the slot machine 1A according to this embodiment, when a coin is inserted in the coin inserting slot 27, the coin sensor 83 detects the insertion, and outputs the coin detecting signal to the CPU 71. The CPU 71 whereby judges insertion of a coin by a player.

When a coin is not inserted (S1:NO), the CPU 71 waits for insertion. Meanwhile, a coin is inserted (S1:YES), the processing flow proceeds to S2. In addition, the coin inserted from the coin inserting slot 27 is stored as a corresponding credit (for example, one credit per dime) in the coin reservoir portion 85.

In S2, an interruption permission flag is set that permits interrupt processing (see FIG.25) as described later. Herein, on the condition that the interrupt permission flag is set, the interrupt processing as shown in FIG.25 is performed periodically (for example, at intervals of 4ms). As described later, the interrupt processing is to raise and lower the display unit 6 based on the switching operation of the first up button 32, first down button 33, second up button 34 and second down button.

Next, performed in S3A is height adjustment processing for the liquid crystal display and control panel 11. In the height adjustment processing, based on a result of detection of the IR sensor 10, the display unit 6 and control unit 12 are integrally raised and/or lowered to place the liquid crystal display 5 and control panel 11 at positions adapted to the height of the head of the player.

Subsequently, performed in S4 is the start accepting processing as described previously in the first embodiment, performed in S5 is various drawing processing as described previously in the first embodiment, and further, performed in S6 is the general game processing as described previously in the first embodiment. Then, it is judged in S7 whether or not a trigger of the bonus game is won as a result of the drawing in S5. Subsequently, as described in the first embodiment, processing of S8 to S11 is executed, and when it is judged that the predetermined time has elapsed with no coin inserted in S11 (YES), reset is the interruption permission flag to permit the interrupt processing (see FIG.25) described later set in S2 as described previously. By resetting the interruption permission flag, such control is performed that the display unit 6 and control unit 12 are not raised nor lowered based on the operation of the first up button 32, first down button 33, second up button 34 and second down button 39 after the game is finished. Accordingly, the fear is eliminated that the display unit 6 and control unit 12 of the slot machine 1A are raised and/or lowered by a third person having no intention to play during a period until a next player starts a game.

Further, performed in S13A is height default processing for the liquid crystal display 5 and control panel 11. In the height default processing, the display unit 6 and control unit 12 moved upward/downward by the player is restored to the default state (with default positions such that the control unit 12 is moved upward the highest relative to the display unit 6 and that the display unit 6 is moved downward the lowest relative to the cabinet 2 (see FIG.17) in this embodiment). Then, the processing is finished.

Based on FIG.23, described next is a height adjustment processing program in S3A performed in the slot machine 1A. Herein, the height adjustment processing is to adjust heights of the liquid crystal display 5 and control panel 11 in accordance with the body height and/or sitting height of a player playing the game. FIG.23 is a flowchart of the height adjustment processing program according to this embodiment.

In the height adjustment processing for the liquid crystal display, it is first judged in S21 whether a player playing the game is detected based on the detecting signal of the IR sensor 10. Then, when the player playing the game is detected (S21:YES), a pulse signal forming a forward-rotation cycle is input to the first stepping motor 41, whereby starting forward rotation of the first stepping motor 41 (S22). Herein, the forward rotation is rotation of the first stepping motor 41 in the rotation direction to raise the display unit 6 and control unit 2 integrally for the cabinet 2 (the pinion 44 moves upward for the rack 40 (see FIG.5).)

FIG.26 is a schematic view illustrating the operation of the slot machine 1A when the IR sensor 10 detects the player playing the game at the time of starting the game. As shown in FIG.26, in the slot machine 1A according to this embodiment, the IR sensor 10 is attached to the upper end portion of the front panel 7 of the display unit 6 while being inclined upward a predetermined angle. At the time of inserting a coin to start the game, the display unit 6 and control unit 12 are in the default state of being most lowered for the cabinet 2 (with the front panel 7 and control panel 11 brought into contact with the cabinet 2) by the height default processing (see FIGs.22 and 24) in S13A performed when the last player finishes the game. In addition, in this embodiment, the default position of the display unit 6 is a position where the display unit 6 is most lowered for the cabinet 2, the default position of the control unit 12 is a position where the control unit 12 is most raised for the display unit 6, and the default state of the slot machine 1A is a state where the units 6 and 12 are in respective default positions.

Then, when the IR sensor 10 detects the player 120 playing the game as shown in FIG.26, in order to adjust the liquid crystal display 5 to be a position easily viewable and suitable for an eye level of the player, the display unit 6 and control unit 12 are raised integrally for the cabinet 2.

Meanwhile, when the player playing the game is not detected (S21:NO), a position of the head of the player 120 is positioned lower than a position detectable by the IR sensor 10, the game is whereby started with the slot machine 1A keeping the default state, and the processing flow proceeds to the start accepting processing in S4.

Further, in S23, based on the detecting signal of the IR sensor 10, it is judged whether the player plying the game is detected or not. Then, when the player playing the game is detected (S23:YES), based on a result of detection of the first position detecting sensor 35, it is further judged whether or not the display unit 6 is in the highest position relative to the cabinet 2 (see FIG.18) (S24).

Then, when the unit 6 is in the highest position (524: YES), the display unit 6 and control unit 12 cannot be raised further, the processing flow whereby proceeds to S25, and input of the pulse signal is halted to halt the forward rotation of the first stepping motor 41. In contrast thereto, when the unit 6 is not in the highest position (S24:NO), the processing flow returns to S23, the pulse signal forming a forward-rotation cycle is continuously input to the first stepping motor 41 to rotate the first stepping motor 41 forward.

Meanwhile, when the player playing the game is not detected (S23:NO), the position of the head of the player 120 reaches a position lower than a position detectable by the IR sensor 10, and input of the pulse signal is halted to halt the forward rotation of the first stepping motor 41 (S25).

FIG.27 is a schematic view showing the slot machine 1A such that the liquid crystal display 5 is in a height suitable for the player 120 as a result of integrally raising the display unit 6 and control unit 12 from the default state. When the display unit 6 and control unit 12 are integrally raised from the default state as shown in FIG.26, the position of the head of the player 120 reaches a position lower than a position detectable by the IR sensor 10 as shown in FIG.27 after a lapse of predetermined time. At this point, by halting raising of the display unit 6 and control unit 12, it is possible to place the liquid crystal display 5 in a position easily viewable and suitable for the eye level of the player.

In addition, after the display unit 6 and control unit 12 are stopped, the player is capable of manually moving the display unit 6 and the control unit 12 integrally upward and/or downward respectively by pressing the first up button 32 and/or first down button 33 during a period until the time of finishing the game (see FIGs.25 and 28) . Accordingly, after the automatic adjustment of matching to the position of the player's head, it is possible to further make a fine height adjustment by the player's intention.

Further, after the display unit 6 and control unit 12 are stopped, the player is capable of manually moving the control unit 12 upward and/or downward relatively to the display unit 6 respectively by pressing the second up button 34 and/or second down button 39 during a period until the time of finishing the game (see FIGs.25 and 28). Accordingly, after the automatic adjustment of matching to the position of the player's head, it is possible to adjust only the control panel 11 with respect to the height of the liquid crystal display 5 by the player's intention.

Based on FIG.24, described next is a height default processing program in S13 performed in the slot machine 1A. Herein, the height default processing is to move the display unit 6 and control unit 12 upward and/or downward to restore a state of the slot machine 1A to the default state (see FIG.17) at the time of finishing the game.

FIG.24 is a flowchart of the height default processing program according to this embodiment.

In the height default processing, first in S131, based on a result of the second position detecting sensor 37, it is judged whether or not the control unit 12 of the slot machine 1A is currently in the default position (the highest position relative to the display unit 6). Such a judgment is made by determining whether or not a current position of the control unit 12 detected by the second position detecting sensor 37 agrees with the default position stored in the ROM 72. Then, when the control unit 12 is judged as being in the default position (S131:YES), the processing flow proceeds to S135.

Meanwhile, when the control unit 12 is not judged as being in the default position (S131:NO), a pulse signal forming a reverse-rotation cycle is input to the second stepping motor 51 to start reverse rotation of the second stepping motor 51 (S132). Herein, the reverse rotation is rotation of the stepping motor 51 in the rotation direction to raise the control unit 12 with respect to the display unit 6 (the pinion moves upward for the rack 50 (see FIG.20)).

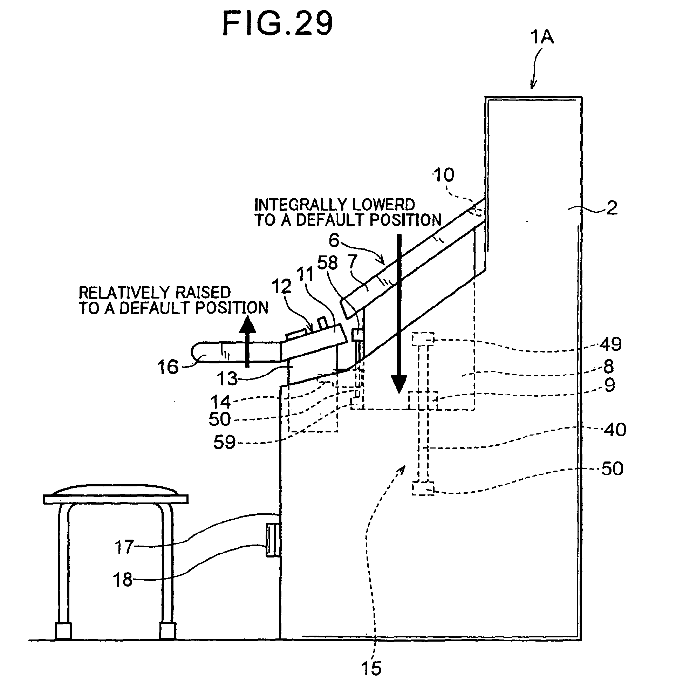

FIG.29 is a schematic view illustrating the operation of the slot machine 1A when the player 120 finishes the game. As shown in FIG.29, when the game by the player is judged as being finished (S11:YES), the slot machine 1A according to this embodiment first raises the control panel 11 to restore to the default position for use of a next player.

Then, in S133, based on a result of detection of the second position detecting sensor 37, it is judged whether or not the control unit 12 of the slot machine 1A is currently in the default position. When the control unit 12 is not judged as being in the default position (S133:NO), the pulse signal forming a reverse-rotation cycle is continuously to the second stepping motor 51 to rotate the second stepping motor 51 reversely.

Meanwhile, when the control unit 12 is judged as being in the default position (S133:YES), input of the pulse signal is halted to halt the reverse rotation of the second stepping motor 51 (S134). By this means, the control unit 12 lowered for the display unit 6 during the game returns to the default position when the player finishes the game. Then, the processing flow proceeds to judgment processing in S135.

In S135, based on a result of detection of the first position detecting sensor 35, it is judged whether or not the display unit 6 of the slot machine 1A is currently in the default position (the lowest position relative to the cabinet 2) . Such a judgment is made by determining whether or not a current position of the display unit 6 detected by the first position detecting sensor 35 agrees with the default position stored in the ROM 72. Then, when the display unit 6 is judged as being in the default position (S135:YES), the height default processing is finished in this state.

Meanwhile, when the display unit 6 is not judged as being in the default position (S135:NO), a pulse signal forming a reverse-rotation cycle is input to the first stepping motor 41 to start reverse rotation of the first stepping motor 41 (S136) . Herein, the reverse rotation is rotation in the reverse direction to the forward direction, and rotation of the first stepping motor 41 in the rotation direction to lower the display unit 6 for the cabinet 2 (the pinion 44 moves downward for the rack 40 (see FIG.5).)

As shown in FIG.29, when the game by the player is judged as being finished (S11:YES), the slot machine 1A according to this embodiment returns the control panel 11 to the default position, and then lowers the liquid crystal display 5 to the default position for use of a next player. In addition, the slot machine 1A displays a predetermined demonstration screen for a period during which no player plays the game. By adjusting display units 6 uniformly to the default position, even when a plurality of slot machines is installed in a line in a game store, any differences do not arise in visibility of the screens due to the problem of viewing angle, and heights of the screens are aligned, whereby not causing disfigurement.

Further, in S137, based on a result of detection of the first position detecting sensor 35, it is judged whether or not the display unit 6 of the slot machine 1A is currently in the default position. When the display unit 6 is not judged as being in the default position (S137:NO), the pulse signal forming a reverse-rotation cycle is continuously to the first stepping motor 41 to rotate the first stepping motor 41 reversely.

Meanwhile, when the display unit 6 is judged as being in the default position (S137:YES), input of the pulse signal is halted to halt the reverse rotation of the first stepping motor 41 (S138). By this means, the display unit 6 moved upward/downward during the game returns to the default position when the player finishes the game.

The interrupt processing program performed in the slot machine 1A according to this embodiment will be described below based on FIG.25. FIG.25 is a flowchart of the interrupt processing program in the slot machine according to this embodiment.

The interrupt processing program is executed at intervals of predetermined time, for example, every 4 ms, during the execution of the main processing program for a period between the interruption permission flag is set (S2) and then reset (S12). Then, monitored are presses of the first up button 32, first down button 33, second up button 34 and second down button 39, and when the first up button 32, first down button 33, second up button 34 or second down button 39 is pressed, based on the press, switching operation is performed to raise or lower the display unit 6 and control unit 12.

In the interrupt processing program, first in S141, the CPU 71 judges whether the first up button 32 is pressed or not based on the switch signal from the first up switch 81. Then, when the CPU 71 judges that the first up button 32 is pressed (5141:YES), the processing flow proceeds to 5142.

In S142, based on a result of detection by the first position detecting sensor 35, it is judged whether the display unit 6 is in the highest position (see FIG.18) relative to the cabinet 2. Then, when the unit 6 is in the highest position (S142:YES), the display unit 6 and control unit cannot 12 cannot further be raised integrally, and the interrupt processing is finished in this state. In contrast thereto, when the unit 6 is not in the highest position (S142:NO), the pulse signal forming a forward-rotation cycle is input to the first stepping motor 41 to start forward rotation of the first stepping motor 41 (S143). The display unit 6 and control unit 12 is whereby raised at predetermined speed (for example, 1 cm/sec) for the cabinet 2.

Subsequently, in S144, based on the switch signal from the first up switch 81, the CPU 71 judges whether the press of the first up button 32 is released or not. When the CPU 71 judges that the first up button 32 is continuously pressed (S144:NO), the pulse signal forming a forward-rotation cycle is input continuously to the first stepping motor 41 to rotate the first stepping motor 41 forward. In contrast thereto, when the CPU 71 judges that the first up button 32 is released (S144:YES), input of the pulse signal is halted to halt the forward rotation of the first stepping motor 41 (S145). The player is whereby capable of positioning the liquid crystal display 5 and control panel 11 in desired heights by the player's intention.

FIG.28 is a schematic view showing the slot machine 1A where the display unit 6 and control unit 12 are integrally moved upward/downward, or the control unit 12 is moved upward/downward relatively to the display unit 6, based on presses of the first up button 32, first down button 33, second up button 34 and/or second down button 39 in the interrupt processing. As shown in FIG.28, the player is capable of manually adjusting positions of the display unit 6 and control unit 12, which are automatically adjusted in starting the game by the height adjustment processing (S3A), individually using the operation buttons for a period until 30 seconds elapse (the game is finished) after the stored coin is consumed.

Meanwhile, when the first up button 32 is not judged as being pressed (S141:NO), it is subsequently judged whether the first down button 33 is pressed or not based on the switch signal from the first down switch 82 (S146) . Then, when the first down switch 33 is judged as being pressed (S146:YES), the processing flow proceeds to S147. Further, when the first down button 33 is not judged as being pressed (S146:NO), the processing flow proceeds to S151.

In S147, based on a result of detection by the first position detecting sensor 35, it is judged whether the display unit 6 is in the lowest position (default position, see FIG.17) relative to the cabinet 2. Then, when the unit 6 is in the lowest position (S147:YES), the display unit 6 and control unit 12 cannot further be lowered integrally, and the interrupt processing is finished in this state. In contrast thereto, when the unit 6 is not in the lowest position (S147:NO), the pulse signal forming a reverse-rotation cycle is input to the first stepping motor 41 to start reverse rotation of the first stepping motor 41 (S148) . The display unit 6 and control unit 12 are whereby integrally lowered at predetermined speed (for example, 1 cm/sec) for the cabinet 2.

Subsequently, in S149, based on the switch signal from the first down switch 82, the CPU 71 judges whether the press of the first down button 33 is released or not. When the CPU 71 judges that the first down button 33 is continuously pressed (S149:NO), the pulse signal forming a reverse-rotation cycle is input continuously to the first stepping motor 41 to rotate the first stepping motor 41 reversely. In contrast thereto, when the CPU 71 judges that the press of the first down button 33 is released (S149:YES), input of the pulse signal is halted to halt the reverse rotation of the first stepping motor 41 (5150) . The player is whereby capable of positioning the liquid crystal display 5 and control panel 11 in desired heights by the player's intention (see FIG.28).

Further, in S151, the CPU 71 judges whether the second up button 34 is pressed or not based on the switch signal from the second up switch 82. Then, when the CPU 71 judges that the second up button 34 is pressed (S151:YES), the processing flow proceeds to S152.

In S152, based on a result of detection by the second position detecting sensor 37, it is judged whether the control unit 12 is in the highest position (that is the default position where the units form a continuous plane, see FIG.18) relatively to the display unit 6. Then, when the unit 12 is in the highest position (5152:YES), the control unit 12 cannot further be raised relatively to the display unit 6, and the interrupt processing is finished in this state. In contrast thereto, when the unit 12 is not in the highest position (S152:NO), the pulse signal forming a forward-rotation cycle is input to the second stepping motor 51 to start forward rotation of the second stepping motor 51 (S153). The control unit 12 is whereby raised at predetermined speed (for example, 1 cm/sec) relatively to the display unit 6.

Subsequently, in S154, based on the switch signal from the second up switch 89, the CPU 71 judges whether the press of the second up button 34 is released or not. When the CPU 71 judges that the second up button 34 is continuously pressed (S154:NO), the pulse signal forming a forward-rotation cycle is input continuously to the second stepping motor 51 to rotate the second stepping motor 51 forward. In contrast thereto, when the CPU 71 judges that the second up button 35 is released (S154:YES), input of the pulse signal is halted to halt the forward rotation of the second stepping motor 51 (S155). The player is whereby capable of positioning the control panel 11 in a desired height by the player's intention (see FIG.28).

Meanwhile, when the second up button 34 is not judged as being pressed (S151:NO), it is subsequently judged whether the second down button 39 is pressed or not based on the switch signal from the second down switch 90 (S156) . Then, when the second down swit'ch 39 is judged as being pressed (S156:YES), the processing flow proceeds to S157. Further, when the second down button 39 is not judged as being pressed (S156:NO), the interrupt processing is finished.

In S157, based on a result of detection by the second position detecting sensor 37, it is judged whether the control unit 12 is in the lowest position (see FIG.19) relatively to the display unit 6. Then, when the unit 12 is in the lowest position (S157:YES), the control unit 12 cannot further be lowered relatively to the display unit 6, and the interrupt processing is finished in this state. In contrast thereto, when the unit 12 is not in the lowest position (S157:NO), the pulse signal forming a reverse-rotation cycle is input to the second stepping motor 51 to start reverse rotation of the second stepping motor 51 (S158). The control unit 12 is whereby lowered relatively to the display unit 6 at predetermined speed (for example, 1 cm/sec).

Subsequently, in S159, based on the switch signal from the second down switch 90, the CPU 71 judges whether the press of the second down button 39 is released or not. When the CPU 71 judges that the second down button 39 is continuously pressed (S159:NO), the pulse signal forming a reverse-rotation cycle is input continuously to the second stepping motor 51 to rotate the second stepping motor 51 reversely. In contrast thereto, when the CPU 71 judges that the press of the second down button 39 is released (S159:YES), input of the pulse signal is halted to halt the reverse rotation of the second stepping motor 51 (S160). The player is whereby capable of positioning the control panel 11 in a desired height by the player's intention (see FIG.28).

As described above, in the slot machine 1A according to this embodiment, when a coin such as a dime is inserted in the coin inserting slot 27 to start a game, the IR sensor 10 provided on the front panel 7 detects a position of the head of the player 120 playing the game, and the display unit 6 and control panel 12 are integrally raised and/or lowered by controlling the rotation of the first stepping motor 41 so that the liquid crystal display 5 and control panel 11 are placed in accordance with the position (S121 to S125). Therefore, when the player starts the game, it is possible to automatically adjust heights so that the liquid crystal display 5 is placed in a position considered the most easily viewable to the player, and that the control panel 11 is placed in a position considered the easiest to operate to the player. Accordingly, the player is capable of playing the game in suitable game environments adapted to his/her own body height and/or seated height, and the advantage is improved while his/her willingness to play the game is enhanced. Further, since a relative positional relationship between the liquid crystal display 5 and control panel 11 does generally not differ largely between players, by integrally moving the display unit 6 and control unit 12 upward/downward, it is possible to minimize an operation amount of the height adjustment. Furthermore, when display is performed in a liquid crystal display with the problem of viewing angle as in this embodiment, the display screen becomes easily viewable by adjusting the height of the liquid crystal display and the advantageous effect is significant.

Moreover, when the game is finished, the display unit 6 having the liquid crystal display 5 and the control unit 12 having the control panel 11 are restored to respective predetermined default positions (such that the display unit 6 is the most lowered for the cabinet 2 together with the control unit 12 in this embodiment) (S131 to S138). Therefore, in order for a next player to adjust the heights easily in starting the game, it is possible to restore the heights of the liquid crystal display 5 and control panel 11 automatically to the original positions prior to adjustments. Further, in displaying a predetermined demonstration screen for a period during which any player does not play the game, by adjusting display units 6 and control panels 12 uniformly to the default positions, even when a plurality of slot machines is installed in a line in a game store, any differences do not arise in visibility of the screens due to the problem of viewing angle, and heights of the screens and control panels 11 are aligned, whereby not causing disfigurement.

Further, it is possible to adjust the heights of the liquid crystal display 5 and control panel 11 by integrally moving the display unit 6 and control unit 12 upward and/or downward with respect to the cabinet 2 based on presses of the up first button 32 and/or first down button 33 (S143 and S148) for a period until a predetermined time elapses (until the game is finished) after a coin is inserted and the stored coin is consumed. Furthermore, it is possible to adjust the height of the control panel 11 with respect to the liquid crystal display 5 by moving the control unit 12 upward and/or downward relatively to the display unit 6 based on presses of the second up button 34 and/or second down button 39 (S153 and S158). Accordingly, in addition to the automatic adjustment, it is possible to make an adjustment to a desired position by the player's intention, while a third person who does intend to play the game is not capable of raising and/or lowering the display unit 6 and or control unit 12, and it is thus possible to prevent a nuisance by the third person. Furthermore, it is possible to vary respective positions of the display unit 6 and control unit 12 individually, and to provide appropriate environments in accordance with more specific body types such as a body height and arm length of the player. Meanwhile, since the relative positional relationship between the liquid crystal display 5 and control panel 11 does generally not differ largely between players, as compared with the case of adjusting respective heights of the liquid crystal display 5 and control panel 11 completely separately, it is possible to minimize an operation amount required for the adjustment and reduce the load on the player.

Furthermore, even when the stored coin is once consumed, newly inserting a coin within a predetermined time (30 seconds in this embodiment) (S10:YES) enables height adjustments of the liquid crystal display 5 and control panel 11 to be performed continuously without judging the game is finished, whereby improving the advantage to the player.

In addition, in the slot machine according to this embodiment, the display unit 6 and control unit 12 are raised or lowered during a period of pressing the first up button 32, first down button 33, second up button 34 or second down button 39, but may be raised or lowered by a predetermined distance whenever pressing the button.

Further, in the slot machine 1A according to this embodiment, default positions are a position where the display unit 6 is most lowered with respect to the cabinet 2 and a position where the control unit 12 is most raised for the display unit 6. However, the default positions are not limited to such positions, and may be their middle positions.

Furthermore, in the slot machine 1A according to this embodiment, heights of the liquid crystal display 5 and control panel 11 are integrally varied by integrally moving the display unit 6 and control unit 12 upward and/or downward for the cabinet 2, but may be varied by moving the cabinet 2 upward and/or downward.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A game machine(1) **characterized by** comprising:
a housing(2);
a game medium inserting slot(27) to insert a game medium in the housing(2);
game medium detecting means (83) for detecting the game medium inserted in the game medium inserting slot(27);
accumulator means(85) for accumulating the game medium inserted in the game medium inserting slot(27);
value varying means (71) for varying a value of the game medium accumulated in the accumulator means(85) based on a result of a game;
value detecting means(71) for detecting the value of the game medium accumulated in the accumulator means(85);
image display means (6) provided in the housing(2), for displaying a predetermined image based on a state of the game;
first elevating means (15) for moving the image display means (6) upward and downward with respect to the housing(2);
first driving means(41) for driving the first elevating means(15);
first operating means(32,33) provided in the housing(2) and electrically connected to the first driving means(41), for performing switching operation on the first driving means(41); and
driving control means(71) for performing control so that the switching operation is performed on the first driving means(41) based on the first operating means(32,33) in case of the game medium being detected by the game medium detecting means(83), while the switching operation is not performed on the first driving means (41) based on the first operating means (32, 33) in case of the value of the game medium detected by the value detecting means(71) becoming a state of disabling continuation of the game.

2. The game machine(1) as claimed in claim 1, **characterized by** further comprising:
counting means(36) for counting a lapse of time,
wherein the state of disabling continuation of the game is a state where a predetermined time elapses in the counting means(36) after the value of the game medium detected by the value detecting means(71) falls below a predetermined value of enabling the game.

3. The game machine(1) as claimed in any one of the preceding claims, **characterized by** further comprising:
storage means(72) for storing a default position of the image display means(6) with respect to the housing(2),
wherein the driving control means (71) controls the first driving means (41) so that a position of the image display means(6) is the default position stored in the storage means(72) when the value of the game medium detected by the value detecting means (71) is in the state of disabling continuation of the game.

4. The game machine(1) as claimed in any one of the preceding claims, **characterized by** further comprising:
position detecting means(10) for detecting a position of the head of a player playing the game,
wherein the driving control means (71) controls the first driving means (41) so as to adjust a position of the image display means(6) with respect to the housing(2), based on the position of the head of the player detected by the position detecting means(10).

5. The game machine(1) as claimed in any one of the preceding claims, **characterized by** further comprising:
a control panel(11) that is provided in the housing(2) and that has operation member for performing operation on the game;
second elevating means(19) for moving the control panel(11) upward and downward relatively to the image display means(6);
second driving means(51) for driving the second elevating means(19); and
second operating means(34,39) provided in the housing(2) and electrically connected to the second driving means(51), for performing switching operation on the second driving means(51),
wherein the first elevating means(15) integrally moves the image display means(6) and the control panel(11) upward and downward with respect to the housing(2).

6. The game machine(1) as claimed in claim 5, **characterized in that** the driving control means(71) performs control so that the switching operation is performed on the first driving means (41) and the second driving means(51) based on the first operating means(32,33) and the second operating means(34,39) in case of the game medium being detected by the game medium detecting means(83), while the switching operation is not performed on the first driving means (41)and the second driving means(51) based on the first operating means(32,33) and the second operating means(34,39) in case of the value of the game medium detected by the value detecting means(71) becoming a state of disabling continuation of the game.

7. The game machine(1) as claimed in claim 6, **characterized by** further comprising:
counting means(36) for counting a lapse of time,
wherein the state of disabling continuation of the game is a state where a predetermined time elapses in the counting means(36) after the value of the game medium detected by the value detecting means(71) falls below a predetermined value of enabling the game.

8. The game machine(1) as claimed in claim 6, **characterized by** further comprising:
storage means(72) for storing a default position of the image display means(6) with respect to the housing(2), and another default position of the control panel(11) with respect to the image display means(6),
wherein the driving control means (71) controls the first driving means(41) and the second driving means(51) so that a position of the image display means(6) and a position of the control panel(11) are respectively the default position and the another default position stored in the storage means(72) when a predetermined game is finished.

9. The game machine(1) as claimed in claim 6, **characterized by** further comprising:
position detecting means(10) for detecting a position of the head of a player playing the game,
wherein the driving control means (71) controls the first driving means (41) so as to adjust positions of the image display means(6) and the control panel (11) with respect to the housing(2), based on the position of the head of the player detected by the position detecting means(10).

10. A game machine(1) **characterized by** comprising:
a housing(2);
image display means(6) provided in the housing(2) for displaying a predetermined image based on a state of a game;
control panel (11) that is provided in the housing (2)and that has operation member for performing operation on the game;
first elevating means (15) for integrally moving the image display means(6) and the control panel(11) upward and downward with respect to the housing(2);
first driving means(41) for driving the first elevating means(15);
first operating means(32,33) provided in the housing(2) and electrically connected to the first driving means(41), for performing switching operation on the first driving means(41);
second elevating means(19) for moving the control panel(11) upward and downward relatively to the image display means(6);
second driving means(51) for driving the second elevating means(19); and
second operating means(34,39) provided in the housing(2) and electrically connected to the second driving means(51), for performing switching operation on the second driving means(51).

11. The game machine(1) as claimed in claim 10, **characterized by** further comprising:
a game medium inserting slot(27) to insert a game medium in the housing(2);
game medium detecting means(83) for detecting the game medium inserted in the game medium inserting slot(27);
accumulator means(85) for accumulating the game medium inserted in the game medium inserting slot(27);
value varying means (71) for varying a value of the game medium accumulated in the accumulator means(85) based on a result of a game;
value detecting means (71) for detecting the value of the game medium accumulated in the accumulator means(85);
and
driving control means(71) for performing control so that the switching operation is performed on the first driving means (41) and the second driving means (51) based on the first operating means(32,33) and the second operating means (34,39) in case of the game medium being detected by the game medium detecting means(83), while the switching operation is not performed on the first driving means (41) and the second driving means (51) based on the first operating means (32, 33) and the second operating means (34, 39) in case of the value of the game medium detected by the value detecting means(71) becoming a state of disabling continuation of the game.
